# EUROPÄISCHE PATENTANMELDUNG

(11) **EP 3 668 051 A1**
(43) Veröffentlichungstag der Anmeldung: **17.06.2020**
(21) Anmeldenummer: 18212365.3
(22) Anmeldetag: 13.12.2018
(51) Int. Cl.: H04L 29/08

(54) **VERFAHREN ZUR DATENÜBERTRAGUNG, KOMMUNIKATIONSGERÄT, COM-PUTERPROGRAMM UND COMPUTERLESBARES MEDIUM**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Die Erfindung betrifft u.a. ein Verfahren zur Datenübertragung, bei dem ein sendender Streamteilnehmer (T1, T2) Datenframes (7) periodisch als Stream gemäß einem Daten-Update-Zyklus (16, 17) an einen empfangenden Streamteilnehmer (L1a, L1b, L2a, L2b) senden möchte, wobei die Weiterleitung der Datenframes (7) über einen Pfad (P1-P4) mit beteiligten Netzwerkknoten (B1-B7) erfolgen soll, wobei eine Reservierungsanfrage gestellt wird, und für wenigstens einen Netzwerkknoten (B1-B7) auf dem Pfad (P1-P4) die Differenz zwischen der maximalen (Lₘₐₓ₁-Lₘₐₓ₇) und der minimalen Latenz (Lₘᵢₙ₁-Lₘᵢₙ₇) (B1-B7) als Latenz-Differenz (ΔL1 - ΔL7) ermittelt wird, und die Latenz-Differenz (ΔL1 - ΔL7) mit dem Daten-Update-Zyklus (16, 17) verglichen wird, und falls der Daten-Update-Zyklus (16, 17) größer oder gleich der Latenz-Differenz (ΔL1 - ΔL7) ist, die Reservierungsanfrage angenommen wird, und falls der Daten-Update-Zyklus (16, 17) kleiner als die Latenz-Differenz (ΔL1 - ΔL7) ist, entweder die Reservierungsanfrage abgelehnt wird, oder der Netzwerkknoten (B1-B7) als Überlagerungs-Netzwerkknoten (B3-B7) betrachtet und versucht wird, an diesem mehr Netzwerkressourcen zu reservieren, als gemäß der Reservierungsanfrage erforderlich ist.

## Beschreibung

Die Erfindung betrifft ein Verfahren zur Datenübertragung in einem insbesondere industriellen Netzwerk, bei dem ein sendender Streamteilnehmer Datenframes periodisch als Stream gemäß einem zu dem Stream gehörigen Daten-Update-Zyklus an einen empfangenden Streamteilnehmer senden möchte, wobei die Weiterleitung der Stream-Datenframes über einen Pfad mit beteiligten Netzwerkknoten, an denen Netzressourcen für den Stream zu reservieren sind, erfolgen soll, wobei für die Einrichtung des Streams eine Reservierungsanfrage gestellt wird, welche eine Angabe erforderlicher Netzressourcen für die Weiterleitung der Datenframes durch die beteiligten Netzwerkknoten umfasst. Darüber hinaus betrifft die Erfindung ein Kommunikationsgerät, ein Computerprogramm und ein computerlesbares Medium.

Bei der unkoordinierten Echtzeitdatenübertragung in Ethernet-Netzwerken kann es aufgrund von temporärer Überlastung zu Paketverlusten kommen. Bei der Verwendung von Ethernet zur Datenübertragung für industrielle Echtzeit-Anwendungen muss ein solcher verhindert werden, da er eventuell zu einem Ausfall einer Anwendung oder auch einen Übergang in einen sicheren Zustand führen kann. Unter einem sicheren Zustand ist dabei insbesondere ein Fehlzustand oder ein Zustand, in dem eine Anlage heruntergefahren bzw. abgeschaltet wird, zu verstehen. Ein Ausfall bzw. Übergang in einen sicheren Zustand kann beispielsweise dadurch verursacht werden, dass Steuerungsdaten nicht mehr bzw. nicht vollständig oder nicht rechtzeitig übertragen werden und die Anlage in einen undefinierten Zustand übergeht, was mit Sicherheitsanforderungen in der Regel nicht vereinbar ist.

Durch die Erweiterung von Ethernet in der AVB Task Group (siehe insbesondere IEEE 802.1) ist es möglich, einen Stream (periodische Übertragung von Datenpaketen bzw. Datenframes) in einem Netzwerk besonders zu schützen und eine Übertragung innerhalb einer gewissen Latenz zu garantieren. Dazu wurde ein Reservierungsprotokoll für eine automatische Konfiguration definiert. Durch das Reservierungsprotokoll werden alle zur Datenübertragung benötigten Netzressourcen, beispielsweise Filter-Database-Einträge (abgekürzt FDB-Einträge), Queue-Speicher, Linkbandbreite, insbesondere am Empfangsport, und/oder weitere Ressourcen an den beteiligten Netzknoten auf dem Übertragungsweg geprüft und, sofern verfügbar, reserviert.

Time Sensitive Networking (TSN) bezeichnet eine Reihe von Standards, die den Bridging Standard IEEE 802.1Q um Mechanismen zur Übertragung echtzeitkritischer Daten über Ethernet-Netze erweitert. Zu den genannten Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Damit das Verhalten eines Streams bestimmbar ist, wurde der so genannten Credit Based Shaper (abgekürzt CBS, siehe insbesondere IEEE 802.1Qav) eingeführt. Dieser sorgt dafür, dass beim Sendevorgang von Stream-Daten eine gewisse Pause nach jedem Datenpaket bzw. Datenframe eingehalten wird. Dadurch kann der nächste Netzwerkknoten, beispielsweise die nächste Bridge auf dem Übertragungsweg sichergehen, dass es keinen Burst von Stream-Daten gibt und die ankommende Datenmenge der reservierten Bandbreite entspricht. Bei Audio- und Videoübertragungen sind dann viele Pakete im Netzwerk unterwegs, bevor das erste Paket den Empfänger erreicht. Durch den Shaper kommt es zu keinem Aufstauen der Pakete eines Streams auf dem Weg zum Empfänger. Durch die vorgesehene Pause nach jedem Frame werden zu früh ankommende Frames/Pakete verzögert.

In industriellen Netzwerken wird AVB aufgrund der vergleichsweise hohen Latenz für Echtzeitanwendungen eher als ungeeignet betrachtet. Um eine möglichst geringe Latenz zu erhalten, sind Shaper ungeeignet, da diese die Datenpakete noch zusätzlich verzögern, um eine periodische Übertragung trotz Störungen durch andere Streams oder durch Best-Effort-Verkehr aufrecht zu erhalten.

Ein weiterer Nachteil von Shapern, wie dem CBS, besteht darin, dass die entsprechende Funktion von der verwendeten Hardware, insbesondere den die Datenpakete weiterleitenden Netzwerkknoten, unterstützt werden muss. Viele bestehende industrielle Netzwerke verfügen jedoch nicht über Hardware, die Shaper unterstützt.

Im industriellen Umfeld sind Lösungen basierend auf Ethernet mit dezidierten Hardware-Erweiterungen entwickelt worden, um den Echtzeit-Anforderungen gerecht zu werden, insbesondere das gewünschte Echtzeit-Verhalten des Netzwerkes zu garantieren.

Eines der so ausgelegten Systeme ist PROFINET (Abkürzung für Process Field Network). PROFINET nutzt TCP/IP und IT-Standards, ist Echtzeit-Ethernet-fähig und ermöglicht die Integration von Feldbus-Systemen. PROFINET selber definiert zwei Echtzeit-Protokolle: RT (Real Time) und IRT (Isochronous Real Time) um zeitkritische Daten insbesondere für die PROFINET-IO-Anwendungen mit verschiedenen Echtzeitanforderungen zu übertragen.

Der Anmelderin ist bekannt, dass bisher bei PROFINET RT eine grobe Überwachung der Link-Bandbreite bei der Planung eines Projektes durchgeführt wird, damit keine einzelne Ethernet-Verbindung von der geplanten Anwendung überlastet wird. Durch die theoretische Abschottung des Netzwerkes vor anderen Anwendungen (kein physikalischer Schutz) und der Begrenzung der eigenen Last können so vergleichsweise geringe Latenzen und geringe Paketverlustraten erreicht werden. Bei Last durch andere Netzwerkanwendungen, beispielsweise Kameras mit hoher Datenrate oder dergleichen, oder bei einem Netzwerk mit mehr als einer Anwendung kann es jedoch zum Paketverlust kommen.

Dies ist darauf zurückzuführen, dass keine getrennten Ressourcen für die Echtzeitdaten vorhanden sind und diese nicht durch ein Protokoll von der jeweiligen Anwendung im Netzwerk reserviert werden. Sind mehrere Anwendungen vorhanden bzw. laufen mehrere Anwendungen, die Daten über das Netzwerk austauschen, haben die Anwendung jeweils die Annahme getroffen, dass Netzwerk gehöre nur ihnen und es fänden keine anderen Datenübertragungen im Netzwerk mit der gleichen Priorität statt.

Ausgehend von dem Stand der Technik ist es eine Aufgabe der vorliegenden Erfindung, ein Verfahren der eingangs genannten Art derart weiterzuentwickeln, dass es eine zuverlässige Echtzeit-Datenkommunikation in einem insbesondere industriellen Netzwerk ermöglicht, insbesondere auch für den Fall mehrerer Anwendungen und ohne dass besondere, Shaper-unterstützende Hardware erforderlich ist. Darüber hinaus ist eine Aufgabe der vorliegenden Erfindung, ein Kommunikationsgerät zur Durchführung eines solchen Verfahrens anzugeben.

Bei einem Verfahren der eingangs genannten Art wird die erstgenannte Aufgabe dadurch gelöst, dass für wenigstens einen, bevorzugt jeden beteiligten Netzwerkknoten auf dem Pfad die Differenz zwischen der maximalen und der minimalen Latenz bis zu diesem Netzwerkknoten als Latenz-Differenz ermittelt oder bereitgestellt wird, und die Latenz-Differenz des oder des jeweiligen Netzwerkknotens mit dem Daten-Update-Zyklus verglichen wird, und
- für den Fall, dass der Daten-Update-Zyklus größer oder gleich der Latenz-Differenz des oder des jeweiligen Netzwerkknotens ist, die Reservierungsanfrage für den oder den jeweiligen Netzwerkknoten angenommen wird, und
- für den Fall, dass der Daten-Update-Zyklus kleiner als die Latenz-Differenz des oder des jeweiligen Netzwerkknotens ist,
   - entweder die Reservierungsanfrage für den oder den jeweiligen Netzwerkknoten abgelehnt wird,
   - oder der oder der jeweilige Netzwerkknoten als Überlagerungs-Netzwerkknoten betrachtet und versucht wird, an diesem mehr Netzwerkressourcen zu reservieren, als gemäß der Reservierungsanfrage erforderlich ist.

Die zweitgenannte Aufgabe wird gelöst durch ein Kommunikationsgerät, insbesondere zur Durchführung des Verfahrens nach einem der vorhergehenden Ansprüche, welches ausgebildet und/oder eingerichtet ist, um Reservierungsanfragen für eine Reservierung von Netzwerkressourcen für Streams abzuwickeln, und um die Differenz zwischen der maximalen und der minimalen Latenz bis zu dem Kommunikationsgerät für zu einem Stream gehörige Datenframes, die von einem sendenden Stream-Teilnehmer gesendet werden und das Kommunikationsgerät erreichen, zu ermitteln oder übergeben zu bekommen, und um die Latenz-Differenz mit einem Daten-Update-Zyklus einer Anwendung zu vergleichen, und eine Reservierungsanfrage für einen Stream
- für den Fall, dass der Daten-Update-Zyklus größer oder gleich der Latenz-Differenz ist, anzunehmen, und
- für den Fall, dass der Daten-Update-Zyklus kleiner als die Latenz-Differenz ist,
   - entweder abzulehnen,
   - oder zu versuchen, an dem Kommunikationsgerät mehr Netzwerkressourcen zu reservieren, als gemäß der Reservierungsanfrage erforderlich ist.

Der Grundgedanke der Erfindung besteht mit anderen Worten darin, eine Datenübertragung via bzw. als Stream mit einer zugehörigen Reservierung von Netzressourcen vorzusehen, das Problem der Vermeidung einer Überlast jedoch nicht über einen Shaper, wie den Credit Based Shaper, zu lösen. Dadurch können niedrige Latenzen erreicht werden, dies auch dann, wenn keine entsprechende Hardware, welche Shaper unterstützt, beispielsweise Hardware mit AVB- bzw. TSN-Support, verwendet wird bzw. verfügbar ist.

Erfindungsgemäß ausgenutzt wird dabei u.a. der Charakter der Datenübertragung, welcher insbesondere von einer Anwendung, welche diese erfordert bzw. bedingt, abhängen kann. Vor allem im industriellen Umfeld, beispielsweise bei PROFINET, liegt in der Regel eine zyklische Datenübertragung und Datenverarbeitung vor. Die Datenübertragung selbst hat einen vergleichsweise großen Zyklus, so dass gesendete Pakete vor dem sich anschließenden Sendevorgang eines nachfolgenden Paketes bei dem Empfänger ankommen. Dies ist durch den Kommunikationszyklus sichergestellt, bei welchem Daten gesendet werden, die Information verarbeitet wird und (erst) anschließend ein erneuter Datenaustausch stattfindet.

Erfindungsgemäß erfolgt eine einfache Überprüfung, die insbesondere zusätzlich bei der Reservierung gemäß dem Stand der Technik durchgeführt und über welche sichergestellt werden kann, dass es zu keiner Überlagerung von Daten aus zwei aufeinanderfolgenden Zyklen, insbesondere Anwendungs-Zyklen kommt. Unter einer Überlagerung im Sinne der vorliegenden Anmeldung ist insbesondere zu verstehen, dass zwei nacheinander abgesendete Datenpakete, etwa zwei aus nachfolgenden Daten-Update-Zyklen stammende Datenpakete eines Streams sich an einem Netzwerkknoten treffen, insbesondere zeitgleich bei diesem eingehen. Dass zwei Pakete aus aufeinanderfolgenden Zyklen sich treffen können, ist in der Regel darauf zurückzuführen, dass Unterschiede zwischen der minimalen Übertragungszeit (minimale Latenz) und der maximalen Übertragungszeit (maximale Latenz) vorliegen. Insbesondere kann ein früher gesendetes Paket in einem "Worst-Case-Szenario" für die Übertragung (maximale akkumulierte Latenz) sich mit einem anschließend, im nächsten Zyklus gesendeten Paket, welches ohne jegliche Interferenzen weitergeleitet wird, treffen. Sich treffende Datenpakete stellen eine mehrfache Belegung der Reservierung dar. Die klassische Reservierung gemäß dem Stand der Technik, also die Reservierung im Umfang der eigentlichen, konventionellen Reservierungsanfrage für den Stream, betrachtet jedoch nur eine einfache Belegung, da gemäß dem Stand der Technik die Annahme gilt, dass Streams insbesondere durch Shaper ihre Bandbreite und einen Mindestabstand entlang des kompletten Übertragungsweges/Pfades beibehalten.

Die Erfindung basiert u.a. auf der Erkenntnis, dass Überlagerungen nicht auftreten, wenn ein Datenpaket bzw. Datenframe, das bzw. der auf die maximale Interferenz innerhalb des Pfades trifft, also mit der maximalen Latenz entlang des Übertragungsweges bzw. Netzwerkpfades übertragen wird, niemals auf ein Paket des nächsten Daten-Update-Zyklus treffen kann, welches mit der minimalen Latenz entlang des Pfades übertragen wird.

Erfindungsgemäß ist daher vorgesehen, dass für jeden beteiligten Netzwerkknoten auf dem Pfad die Differenz zwischen der maximalen und der minimalen möglichen Latenz bis zu diesem Netzwerkknoten als Latenz-Differenz ermittelt oder bereitgestellt wird, und für jeden beteiligten Netzwerkknoten auf dem Pfad der Daten-Update-Zyklus mit der Latenz-Differenz des jeweiligen Netzwerkknotens verglichen wird.

Die erfindungsgemäß vorgesehene zusätzliche Überprüfung bzw. Heranziehung des Daten-Update-Zyklus des Streams kann zusätzlich als eigenes Ressourcen-Zuteilungsmodell in die standardisierte Stream-Reservierung aufgenommen werden. Insbesondere zur Unterstützung von mehreren Anwendungsfällen und für unterschiedliche Shaper ist es sinnvoll, bevorzugt sämtlichen notwendigen Überprüfungen als sogenanntes Ressourcen-Zuteilungsmodell zu kombinieren. Ein solches Modell kann die notwendigen Überprüfungen für die Etablierung eines Streams für ein spezielle Einsatzvariante eines Shapers kombinieren. Eine gleichzeitige Verwendung des gleichen Shapers mit anderen Annahmen der Einsatzvariante (eine Variante ist dabei die Ausnutzung des Daten-Update-Zyklus der Anwendung und der Tatsache, dass nur ein Paket innerhalb eines Daten-Update-Zyklus unterwegs ist) ist durch die unterschiedliche Betrachtung der Ressourcen möglich. Durch die Zusammenfassung als Modell wird es besonders einfach, in einem Netzwerk unterschiedliche Modelle parallel zu betreiben.

Es sei angemerkt, dass es grundsätzlich möglich ist, die minimale bis zu dem bzw. dem jeweiligen Netzwerkknoten akkumulierte Latenz und/oder die minimale über den (gesamten) Pfad bzw. Übertragungsweg bzw. alle Netzwerkknoten akkumulierte Latenz mit null anzunehmen. Eine solche "Vernachlässigung" der minimalen Latenz bis auf null macht es entbehrlich, die tatsächliche minimale (akkumulierte) Latenz zu ermitteln, und führt zu keinen Nachteilen, da dies einer oberen Abschätzung entspricht. Das erfindungsgemäße Kommunikationsgerät kann entsprechend ausgebildet und/oder eingerichtet sein.

Der zu einem Stream bzw. einer Anwendung gehörige Daten-Update-Zyklus, der erfindungsgemäß betrachtet wird, kann beispielsweise einige oder einige zehn Millisekunden betragen, was bedeutet, dass alle paar bzw. alle paar zehn Millisekunden ein Stream-Datenpaket unter Nutzung von für den Stream reservierten Netzressourcen von dem bzw. bei dem sendenden Stream-Teilnehmer gesendet werden und von den beteiligten Netzwerkknoten weitergeleitet werden soll. Unter dem Daten-Update-Zyklus ist somit insbesondere diejenige Zeitspanne zu verstehen, die zwischen zwei aufeinanderfolgenden Datenpaket-Sendevorgängen des zyklischen Streams liegt.

Die Information über den Daten-Update-Zyklus kann beispielsweise von einer Anwendung, welche den Stream nutzt bzw. nutzen möchte, abgeleitet, erhalten und/oder bereitgestellt werden. Es kann sich insbesondere um eine industrielle Automatisierungs-Applikation handeln, deren Daten-Update-Zyklus feststeht bzw. bekannt ist.

Der Daten-Update-Zyklus kann den beteiligten Netzwerkknoten über die Stream-Bekanntgabe mitgeteilt werden, bevorzugt mit einer Stream-Advertise-Nachricht für den jeweiligen Stream, die in der Regel von einem Stream-Initiator, der ein Talker sein kann, gesendet wird. Im Zusammenhang mit der Stream-Bekanntgabe sei auf den IEEE 802.1 Q Standard - insbesondere auf das Kapitel 35 "Stream Reservation Protocol (SRP)" verwiesen.

Das Szenario, in dem der Vergleich des Daten-Update-Zyklus mit der Latenz-Differenz von dem (jeweiligen) Netzwerkknoten selber durchgeführt wird, stellt den dezentralen Fall dar. Selbstverständlich ist es auch möglich, dass dieser Vergleich für jeden Netzwerkknoten von einer bzw. an zentraler Stelle durchgeführt wird, beispielsweise mittels einer zentralen Auswerte- und/oder Steuereinheit, die entsprechend ausgebildet und/oder eingerichtet ist, etwa durch einen geeigneten zentralen Rechner gegeben sein kann. Dann kann eine Virtualisierung der Gerätefunktion "Reservierung" vorgesehen sein, über welche bevorzugt die Reservierung insbesondere mit zusätzlicher Überprüfung abgewickelt wird, wobei die Funktion zweckmäßiger Weise für jeden beteiligten Netzwerkknoten einzeln vorhanden ist.

Es sei angemerkt, dass insbesondere im Rahmen von AVB und TSN ein Sender (Quelle) von Datenframes auch als Talker und ein Empfänger (Ziel) von Datenframes auch als Listener bezeichnet wird.

Alternativ oder zusätzlich ist es möglich, dass für eine bestimmte Streamklasse jeweils ein fester Wert für den Daten-Update-Zyklus gegeben ist. Da die Stream-Klasse den Netzwerkknoten mit der Stream-Bekanntgabe bevorzugt indirekt über die verwendete Priorität mitgeteilt wird, kann der Daten-Update-Zyklus bei festem Zusammenhang dann von dieser abgeleitet werden.

Sofern der erfindungsgemäß vorgesehene Vergleich zwischen Daten-Update-Zyklus und Latenz-Differenz das Ergebnis liefert, dass der Daten-Update-Zyklus größer oder gleich der Latenz-Differenz an dem oder den beteiligten Netzwerkknoten ist, wird die Reservierungsanfrage angenommen und insbesondere an dem oder den beteiligten Netzwerkknoten versucht, Netzwerkressourcen gemäß der bzw. im Umfang der Reservierungsanfrage zu reservieren. Dabei wird bevorzugt die Ressourcenprüfung bei der Vorabprüfung im Schritt der Weitergabe der Streambeschreibung und - sofern ausreichen Ressourcen vorhanden sind - eine endgültige Reservierung bei der Listener Anmeldung durchgeführt. Die Vorabprüfung erfolgt bevorzugt in an sich bekannter Weise bei der Weitergabe der von einem den Stream initiierenden Streamteilnehmer, insbesondere Talker, herausgegebenen Streambeschreibung, insbesondere im Talker Advertise, und die endgültige Reservierung durch die bzw. im Rahmen der Anmeldung eines oder mehrerer Streamteilnehmer, insbesondere Listener, die an dem Stream teilnehmen möchten.

Die Reservierung von Ressourcen kann auf die aus dem Stand der Technik für Streams hinlänglich vorbekannte Weise erfolgen, beispielsweise wie gemäß dem vorbekannten Stream-Reservation-Protocol (SRP) und/oder dem vorbekannten Multiple Stream Registration Protocol (MSRP) (siehe insbesondere IEEE 802.1Q) vorgesehen. Der Fall, dass die Reservierung unter Nutzung eines Protokolls abgewickelt wird, stellt einen dezentralen Reservierungsvorgang dar.

Selbstverständlich ist auch möglich, dass die Reservierung gemäß der Reservierungsanfrage alternativ oder zusätzlich zentral erfolgt bzw. abgewickelt wird.

Es sei angemerkt, dass bei der Frage bzw. der Überprüfung, ob ausreichend Netzwerkressourcen für eine Reservierung vorhanden sind, in hinlänglich vorbekannter Weise grundsätzlich auf den oder den jeweiligen Sendeport eines Netzwerkknotens abzustellen ist. Alle für den (jeweiligen) Sendeport anfallenden Daten müssen übertragen werden und treffen/stauen sich entsprechend in der Queue für den (jeweiligen) Sendeport. Sofern ein Netzwerkknoten über mehr als einen Port Daten weiterleiten, also senden soll, sind die Sendeports separat zu betrachten, ist insbesondere für jeden Sendeport separat zu prüfen, ob ausreichend Ressourcen für eine angefragte Reservierung vorhanden sind und ist an jedem Sendeport, sofern möglich, eine Reservierung durchzuführen.

Ergibt die erfindungsgemäß stattfindende zusätzliche Überprüfung hingegen, dass der Daten-Update-Zyklus kleiner ist als die Latenz-Differenz eines oder auch mehrerer Netzwerkknoten ist, existieren zwei Möglichkeiten.

Gemäß der ersten Möglichkeit wird die Reservierungsanfrage für den oder die bzw. von dem oder den betroffenen Netzwerkknoten abgelehnt, dies auch, wenn ausreichend Ressourcen gemäß der Reservierungsanfrage verfügbar sind. Es ist dann nicht sichergestellt, dass Datenframes in dem Zyklus des Sendevorganges ihr bzw. ihre Endgeräte erreichen.

Um in einem solchen Falle dennoch eine Datenübertragung via Stream zu ermöglichen, kann dann vorgesehen sein, dass der Daten-Update-Zyklus (insbesondere seitens einer Anwendung) derart vergrößert wird, dass er der größten Latenz-Differenz der beteiligten Netzwerkknoten entspricht oder diese überschreitet.

Alternativ oder zusätzlich zu einer Erhöhung des Daten-Update-Zyklus kann auch eine andere Stream-Klasse gewählt werden, für welche sich eine geringere Latenz-Differenz für den oder die beteiligten Netzwerkknoten (B1-B7) ergibt. In diesem Falle wird bevorzugt eine Stream-Klasse gewählt für die gilt, dass die größte Latenz-Differenz der beteiligten Netzwerkknoten kleiner oder gleich dem Daten-Update-Zyklus ist.

Die größte Latenz-Differenz wird in der Regel zu dem in Übertragungsrichtung letzten Netzwerkknoten, also dem Netzwerkknoten unmittelbar vor dem bzw. einen Empfänger gehören.

Im Anschluss an die Vergrößerung des Daten-Update-Zyklus und/oder einen Wechsel der Stream-Klasse zu Erhalt einer geringeren Latenz kann dann eine Reservierung der Ressourcen an den beteiligten Netzwerkknoten - bevorzugt in völliger Analogie zum Stand der Technik - insbesondere erneut angefragt und, sofern möglich, zugelassen werden. Die Gefahr von Überlagerungen ist wieder über das geeignete Verhältnis von Daten-Update-Zyklus und Latenz-Differenz ausgeräumt. Besonders bevorzugt wird eine neue Reservierungsanfrage mit dem neuen, vergrößerten Daten-Update-Zyklus und/oder der neuen Stream-Klasse herausgegeben. Der neue, vergrößerte Daten-Update-Zyklus und/oder die neue Stream-Klasse kann den Netzwerkknoten beispielsweise im Rahmen einer neu herausgehenden Advertise-Nachricht, insbesondere über einen neuen Talker Advertise, mitgeteilt werden.

Es sei angemerkt, dass, sofern Daten-Update-Zyklen jeweils für bestimmte Klassen fest vorgegeben sind, eine Erhöhung des Daten-Update-Zyklus auch über eine Änderung der Stream-Klasse zu einer solchen mit größerem/längerem Daten-Update-Zyklus erfolgen. In diesem Fall wird dann bevorzugt die neue Stream-Klasse mitgeteilt.

Alternativ dazu, dass die (konventionelle) Reservierungsanfrage abgelehnt und gegebenenfalls der Daten-Update-Zyklus erhöht und/oder auf eine Stream-Klasse mit geringerer Latenz gewechselt wird, kann auch der Daten-Update-Zyklus und/oder die Klasse bzw. Latenz beibehalten und eine angepasste Reservierung versucht bzw. durchgeführt werden. Konkret wird in diesem Falle versucht, an dem oder den Netzwerkknoten, an denen eine Überlagerung auftreten kann, und der oder die als Überlagerungs-Netzwerkknoten betrachtet werden, mehr Netzwerkressourcen zu reservieren als gemäß der Reservierungsanfrage erforderlich bzw. vorgesehen ist. Stehen die angefragten mehr Ressourcen zur Verfügung, erfolgt zweckmäßiger Weise eine entsprechende angepasste Reservierung. Bei der Überprüfung, ob ausreichend Ressourcen vorhanden sind und der anschließenden etwaigen Reservierung ist wieder auf den (jeweiligen) Sendeport abzustellen. Weist ein Netzwerkknoten mehrere Sendeports auf, bzw. soll er über mehrere Porst Daten senden, ist jeder Sendeport separat zu betrachten, insbesondere für jeden Sendeport zu prüfen, ob ausreichend Ressourcen vorhanden sind und wenn ja, die Reservierung vorzunehmen.

Gemäß dieser zweiten Möglichkeit wird mit anderen Worten das Auftreten einer Überlastsituation nicht durch geeignete Wahl bzw. Einstellung des Verhältnisses von Daten-Update-Zyklus und Latenz-Differenz vermieden, sondern es wird vielmehr in Kauf genommen, und gezielt versucht mehr Ressourcen zu reservieren, als gemäß der Reservierungsfrage vorgesehen. Es erfolgt eine zusätzliche Reservierung, die auch als "Über-Reservierung" erachtet werden kann bzw. es wird eine solche versucht. Durch die zusätzliche Reservierung erfolgt indirekt die Berücksichtigung bei der Berechnung der maximalen Latenz für den bzw. in dem jeweiligen Netzwerkknoten. Im Fall der Überlastsituation sind in den Netzwerkknoten für eine begrenzte Dauer (Überlast tritt auf, wenn sich Frames von zwei Daten-Update-Zyklen treffen) mehr Frames als in der Reservierungsanfrage vorhanden, welche zu einer zusätzlichen Latenz für alle Frames der anderen Streams führen. Die Berechnung der maximalen Latenz in den Netzwerkknoten basiert typischer Weise auf einer angenommenen maximalen Datenmenge, die eine Verzögerung in der Übertragung bewirkt. Durch die Reservierung wird die angenommene Grenze überwacht und die Latenz kann dadurch eingehalten werden. Wenn die Überlast nicht betrachtet wird, kommt es zu einer nicht erlaubten zusätzlichen Verzögerung in den Netzwerkkomponenten.

Durch die Betrachtung der möglichen Überlast bei der Reservierung wird die zusätzliche Datenmenge durch die Überreservierung berücksichtigt und es kann zu keiner nicht betrachteten Verzögerung kommen. Bei der Reservierung von weiteren Streams wird die mögliche Überlast durch die Überreservierung berücksichtigt. Eine zusätzliche, nicht betrachtete durch Überlagerung bedingte Latenz kann im Ergebnis in diesem Fall zuverlässig verhindert werden.

Da erfindungsgemäß allein über die Ablehnung der Reservierung bzw. die Durchführung einer angepassten Reservierung sichergestellt wird, dass es zu keinen Überlastungen kommt bzw. eine zusätzliche Latenz durch solche vermieden wird, und keine Shaper erforderlich sind, kann bestehende Hardware, ggf. nach einem Software-Update bzw. einer Software-Erweiterung für die Reservierung von Streams, weiter verwendet werden. Ein Austausch bestehender Hardware, insbesondere Netzwerkknoten bzw.

Netzwerkkomponenten, wie etwa Bridges und/oder Switches und/oder Router, durch solche, die Shaper bzw. ein Shaping des Datenverkehrs unterstützen, ist nicht erforderlich. So können in erheblichem Maße Aufwand und Kosten vermieden und Bestandssysteme, insbesondere bestehende bevorzugt industrielle Netzwerke weiterhin verwendet werden, was einen erheblichen Vorteil darstellt. Mit der erfindungsgemäßen Vorgehensweise werden Stream-Reservierungen mit garantierten Netzressourcen ohne zusätzliche Verzögerungen durch Shaper möglich.

Im simpelsten Falle möchte genau ein sendender Stream-Teilnehmer (insbesondere Talker) an genau einen empfangenden Stream-Teilnehmer (Insbesondere Listener) Datenframes/-pakete über den bzw. als Stream senden. Es ist aber natürlich auch möglich, dass an einem Stream mehr als zwei Teilnehmer teilnehmen wollen.

Es kann beispielsweise sein, dass genau ein sendender Stream-Teilnehmer an mehrere empfangende Stream-Teilnehmer, mit denen der sendenden Stream-Teilnehmer jeweils über einen Pfad mit beteiligten Netzwerkknoten verbunden ist, Datenframes periodisch als Stream senden möchte.

Alternativ oder zusätzlich kann vorgesehen sein, dass mehrere sendende Stream-Teilnehmer an genau einen empfangenden Stream-Teilnehmer, mit dem jeder sendende Stream-Teilnehmer jeweils über einen Pfad mit beteiligten Netzwerkknoten verbunden ist, Datenframes periodisch als Stream senden möchten.

In einer Konstellation mit mehr als zwei Stream-Teilnehmern ist bevorzugt vorgesehen, dass für wenigstens einen, bevorzugt jeden beteiligten Netzwerkknoten auf jedem Pfad die Differenz zwischen der maximalen und der minimalen Latenz bis zu diesem Netzwerkknoten als Latenz-Differenz ermittelt oder bereitgestellt wird, und die Latenz-Differenz des jeweiligen Netzwerkknotens mit dem Daten-Update-Zyklus verglichen wird, und
- für den Fall, dass der Daten-Update-Zyklus größer oder gleich der Latenz-Differenz des oder des jeweiligen Netzwerkknotens ist, die Reservierungsanfrage für den oder den jeweiligen Netzwerkknoten angenommen wird, und
- für den Fall, dass der Daten-Update-Zyklus kleiner als die Latenz-Differenz des oder des jeweiligen Netzwerkknotens ist,
   - entweder die Reservierungsanfrage für den oder den jeweiligen Netzwerkknoten abgelehnt wird,
   - oder der oder der jeweilige Netzwerkknoten als Überlagerungs-Netzwerkknoten betrachtet und versucht wird, an diesem mehr Netzwerkressourcen zu reservieren, als gemäß der Reservierungsanfrage erforderlich ist.

Selbstverständlich ist es möglich, dass mehrere Streams einzurichten sind bzw. eingerichtet werden, insbesondere über mehrere Streams Daten zwischen zu dem jeweiligen Stream gehörige (zwei oder mehr) Streamteilnehmer zu übertragen sind. Dann ist im Rahmen der erfindungsgemäß vorgesehenen zusätzlichen Überprüfung für jeden Stream der zu dem jeweiligen Stream gehörige Daten-Update-Zyklus zu betrachten. Entsprechend wird zweckmäßiger Weise für jeden Stream für wenigstens einen, bevorzugt jeden beteiligten Netzwerkknoten auf dem oder jedem zu dem Stream gehörigen Pfad die Differenz zwischen der maximalen und der minimalen Latenz bis zu diesem Netzwerkknoten als Latenz-Differenz ermittelt oder bereitgestellt, und die Latenz-Differenz des oder des jeweiligen Netzwerkknotens mit dem zu dem jeweiligen Stream gehörigen Daten-Update-Zyklus verglichen und je nach Ergebnis des Vergleichs die zu dem jeweiligen Stream gehörige Reservierungsanfrage für den oder den jeweiligen Netzwerkknoten angenommen, abgelehnt oder versucht, mehr Ressourcen zu reservieren.

Unter beteiligten Netzwerkknoten sind die Netzwerkknoten auf dem oder den Übertragungsweg(en) bzw. Pfad(en) zu verstehen, der oder die die Teilnehmer eines Streams miteinander verbinden und entlang derer die Weiterleitung der Stream-Datenframes erfolgen soll bzw. erfolgt. Bei den an einem Stream beteiligten Netzwerkknoten handelt sich insbesondere um diejenigen Netzwerkknoten, welche die zu dem Stream gehörigen Datenframes von dem oder den Talker(n) zu dem oder den Listener(n) weiterleiten.

Netzwerkknoten können beispielsweise in Form von Bridges und/oder Switches und/oder Routern, jeweils sowohl in Form von Geräten als auch Software-implementiert, vorliegen. Bei dem erfindungsgemäßen Kommunikationsgerät kann es sich insbesondere um einen Netzwerkknoten, also beispielsweise eine Bridge oder einen Switch oder einen Router handeln.

Bevorzugt handelt es sich bei dem Netzwerk um ein Ethernetbasiertes Netzwerk (zu Ethernet siehe insbesondere IEEE 802.3). Die Netzwerkknoten sind entsprechend bevorzugt Ethernet-fähig. Weiterhin bevorzugt sind die Netzwerkknoten AVB- bzw. TSN-fähig.

Bei den Stream-Teilnehmern handelt es sich bevorzugt um Endgeräte. Im Falle eines industriellen Netzwerkes, etwa für eine Automatisierung, können diese beispielsweise durch eine oder mehrere insbesondere speicherprogrammierbare Steuerungen, IO-Geräte, Bildschirme, Eingabegeräte oder dergleichen gegeben sein.

Bei Netzwerkressourcen, die für den (jeweiligen) Stream an den Netzwerkknoten reserviert werden (sollen), kann es sich in aus dem Stand der Technik, insbesondere von AVB bzw. TSN hinlänglich bekannter Weise beispielsweise um Filtering-Database-Einträge (englisch filtering database entries, abgekürzt FDB-Einträge) und/oder Queue-Speicher und/oder Bandbreite, insbesondere Linkbandbreite, bevorzugt am Sende-/Ausgangsport, handeln.

Eine ursprüngliche (konventionelle) Reservierungsanfrage und/oder eine angepasste Reservierungsanfrage kann insbesondere in hinlänglich vorbekannter Weise Teil einer Stream-Bekanntgabe, die insbesondere von einem einen Stream initiierenden Streamteilnehmer herausgegeben wird, sein oder durch eine solche gebildet werden. Bei einer Stream-Bekanntgabe, welche eine (konventionelle oder angepasste) Reservierungsanfrage umfasst bzw. eine solche darstellt, kann es sich insbesondere um eine Talker Advertise Nachricht handeln.

Eine besonders bevorzugte Ausführungsform des erfindungsgemäßen Verfahrens zeichnet sich dadurch aus, dass für den oder jeden Überlagerungs-Netzwerkknoten eine Zahl n bestimmt wird, indem die Latenz-Differenz des oder des jeweiligen Überlagerungs-Netzwerkknotens durch den Daten-Update-Zyklus dividiert wird, und der erhaltene Wert, sofern er nicht bereits eine ganze Zahl darstellt, auf die nächste ganze Zahl aufgerundet wird, und insbesondere versucht wird, n mal so viel Netzwerkressourcen, wie gemäß der Reservierungsanfrage erforderlich ist, zu reservieren. Das erfindungsgemäße Kommunikationsgerät ist in bevorzugter Ausgestaltung entsprechend ausgebildet und/oder eingerichtet, um die Latenz-Differenz durch den Daten-Update-Zyklus zu dividieren, und den erhaltenen Wert, sofern er nicht bereits eine ganze Zahl darstellt, auf die nächste Zahl aufzurunden, und insbesondere zu versuchen, n mal so viel Netzwerkressourcen, wie gemäß der Reservierungsanfrage erforderlich ist, zu reservieren.

n ist dabei eine ganze Zahl, die für den oder jeden Überlagerungs-Netzwerkknoten individuell bestimmbar ist bzw. bestimmt wird. Diese Zahl kann für den (jeweiligen) Überlagerungs-Netzwerkknoten erhalten werden, indem die Differenz zwischen der minimalen und der maximalen Latenz bis zu dem (jeweiligen) Überlagerungs-Netzwerknoten durch den Daten-Update-Zyklus dividiert wird und der erhaltene Wert, sofern er nicht bereits eine ganze Zahl darstellt, auf die nächste ganze Zahl aufgerundet wird.

Liefert die Bildung des Quotienten für einen Überlagerungs-Netzwerknoten beispielsweise den Wert 1,15 wird bis auf die nächste ganze Zahl aufgerundet und für diesen Netzwerkknoten n=2 gesetzt. Es wird entsprechend versucht, doppelte Ressourcen für diesen bzw. an diesem Netzwerkknoten zu reservieren. Liefert dieser Quotient für einen Überlagerungs-Netzwerkknoten beispielsweise bereits den glatten Wert 2, wird ebenfalls n=2 gesetzt. Liefert der Quotient beispielsweise den Wert 2,7 für einen Knoten, wird für diesen Knoten n=3 gesetzt und entsprechend versucht, dreifache Ressourcen zu reservieren usw. Es sei angemerkt, dass es - je nachdem, wie sich der Daten-Update-Zyklus zu der Differenz zwischen minimaler und maximaler Latenz bis zu dem jeweiligen Überlagerungs-Netzwerkknoten verhält, für alle Überlageruns-Knoten auf einem Übertragungsweg der gleiche Wert für n gelten oder dieser auch verschieden sein kann.

Über den Quotienten aus der Differenz zwischen der minimalen und der maximalen Latenz bis zu dem (jeweiligen) Überlagerungs-Netzwerkknoten und dem Daten-Update-Zyklus kann ermittelt werden, wie viele Stream-Datenpakete aus verschiedenen Daten-Update-Zyklen sich (maximal) an einen Netzwerkknoten treffen können. Bei der Ausführungsform mit der n-fache Reservierung wird der Anzahl der Datenpakete, die sich maximal in einem Worst-Case-Szenario treffen können, Rechnung getragen.

Weiterhin bevorzugt ist vorgesehen, dass die Reservierung von Netzwerkressourcen an den beteiligten Netzwerkknoten mittels eines Reservierungsprotokolls abgewickelt wird, welches bevorzugt derart erweitert ist, dass der Vergleich zwischen dem Daten-Update-Zyklus und der Latenz-Differenz des jeweiligen Netzwerkknotens und die Ablehnung und/oder die angepasste Reservierung in Reaktion auf das Ergebnis des Vergleichs über das Reservierungsprotokoll abgewickelt werden kann oder abgewickelt wird. Besonders bevorzugt ist das verwendete Reservierungsprotokoll derart erweitert, dass der Vergleich zwischen dem Daten-Update-Zyklus und der Latenz-Differenz des jeweiligen Netzwerkknotens und die Ablehnung und/oder der Versuch, mehr Netzwerkressourcen zu reservieren als gemäß der Reservierungsanfrage erforderlich ist, über das Reservierungsprotokoll abgewickelt werden kann oder abgewickelt wird.

Diese dezentrale Abwicklung der (konventionellen) Reservierung und/oder angepassten Reservierung hat sich als besonders geeignet erwiesen.

Das erfindungsgemäße Kommunikationsgerät zeichnet sich in Weiterbildung entsprechend dadurch aus, dass es ausgebildet und/oder eingerichtet ist, um die Reservierung von Netzwerkressourcen mittels eines Reservierungsprotokolls abzuwickeln, welches bevorzugt derart erweitert ist, dass der Vergleich zwischen dem Daten-Update-Zyklus und der Latenz-Differenz des jeweiligen Netzwerkknotens und die Ablehnung und/oder der Versuch mehr Ressourcen zu reservieren, als gemäß der Reservierungsanfrage erforderlich ist, über das Reservierungsprotokoll abgewickelt werden kann oder abgewickelt wird.

Gemäß einer weiteren Ausführungsform des erfindungsgemäßen Verfahrens kann vorgesehen sein, dass die maximale Latenz bis zu dem oder dem jeweiligen Netzwerkknoten unter Verwendung einer Stream-Ankündigungsnachricht, die insbesondere von einem Stream-Teilnehmer gesendet wird und den oder den jeweiligen Netzwerkknoten erreicht, bevorzugt von dem oder dem jeweiligen Netzwerkknoten ermittelt wird. Das erfindungsgemäße Kommunikationsgerät ist entsprechend bevorzugt ausgebildet und/oder eingerichtet, um eine maximale Latenz unter Verwendung einer Stream-Ankündigungsnachricht, die insbesondere von einem Stream-Teilnehmer gesendet wird und das Kommunikationsgerät erreicht, zu ermitteln.

Dies entspricht der aus dem Stand der Technik vorbekannten Möglichkeit, über eine Stream-Bekanntgabe, insbesondere eine Advertise-Nachricht, zum Beispiel einen Talker Advertise, die maximalen akkumulierten Latenzen (englisch accumulated latency, abgekürzt acc latency) über sämtliche Netzwerkknoten auf dem Übertragungsweg "einzusammeln" bzw. zu akkumulieren. In diesem Zusammenhang sei insbesondere auf den Standard IEEE 802.1 Q, darin vor allem auf das Kapitel zum SRP verweisen.

Weiterhin erfolgt zweckmäßiger Weise eine "Worst-Case-Betrachtung" in jedem Netzwerkknoten, etwa jeder Bridge. Im Rahmen einer solchen wird dann insbesondere die maximale Datenmenge, die ankommen kann, bestimmt. Die maximale Datenmenge pro Ausgangsport führt zur größten möglichen Latenz und ist durch die Konfiguration in den Netzwerkknoten bekannt; durch eine Limitierung der Datenmenge pro Eingangsport und/oder durch eine maximale erlaubte Latenz pro Hop. Zusammen mit dem Wissen über den inneren Aufbau des Netzwerkknotens und der Abarbeitung der maximalen Datenmenge kann für den jeweiligen Netzwerkknoten die maximale Interferenz und damit die maximale Latenz für die Übertragung von Stream Paketen bestimmt werden.

Es kann vorgesehen sein, dass dem (jeweiligen) Stream eine Priorität für die Weiterleitung der Datenframes zugeordnet ist, und im Netzwerk keine Streamklasse mit höherer Priorität existiert, von der nicht bekannt ist, wie sie behandelt wird.

Bevorzugt wird für den oder jeden Stream die höchste Priorität verwendet, um einen Einfluss durch höhere Prioritäten zu vermeiden. Es ist aber auch nicht ausgeschlossen, dass eine niedrigere als die höchste Priorität für einen oder mehrere Streams verwendet wird.

Es sei angemerkt, dass bevorzugt für den oder die Streams die höchste Priorität gewählt bzw. verwendet wird, um den Einfluss durch höhere Prioritäten zu vermeiden. Existieren höhere Prioritäten bzw. Streamklassen mit solchen, ist für diese zweckmäßiger Weise bekannt, wie sie behandelt werden. Insbesondere sollte die maximale Größe und Anzahl an Datenframes pro Zeitfenster von bzw. für etwaige höhere Prioritäten dann bekannt und begrenzt sein. Dass höhere Streamklassen mit bekannter Charakteristik möglich sind, entspricht insbesondere der auch von AVB vorbekannten Handhabung für Streamklassen.

Datenverkehr mit höherer bzw. höheren Prioritäten wird, sofern vorhanden, zweckmäßiger Weise bei der Latenzberechnung berücksichtigt. Existiert beispielsweise eine zweite Stream-klasse mit niedrigerer Priorität als ein erste, sollte die höhere Priorität durch zusätzliche Latenz berücksichtigt werden.

Nachdem für den Fall, dass der Daten-Update-Zyklus größer gleich der Latenz-Differenz ist (ggf., nachdem der Daten-Update-Zyklus dafür gezielt erhöht bzw. verlängert wurde), eine Reservierung von Ressourcen in konventionellem Umfang, insbesondere gemäß der Reservierungsanfrage, erfolgreich war, bzw. für den Fall, dass in Kauf genommen wurde, dass der Daten-Update-Zyklus die Latenz-Differenz unterschreitet, die angepasste Reservierung ("Mehr-Reservierung" bzw. "Über-Reservierung") erfolgreich war, werden zweckmäßiger Weise Stream-Datenframes unter Nutzung von an den beteiligten Netzwerkknoten für den oder den jeweiligen Stream reservierten Netzwerkressourcen weitergeleitet. Dabei ist in besonders bevorzugter Ausgestaltung vorgesehen, dass jeder beteiligte Netzwerkknoten einen empfangenen Stream-Datenframe zum frühestmöglichen Zeitpunkt, insbesondere ohne zusätzliche Verzögerung, etwa gemäß einem Kredit-basierten Former (Credit Based Shaper, abgekürzt CBS), weiterleitet. Zum frühestmöglichen Zeitpunkt bedeutet insbesondere, dass der jeweilige Frame nicht zusätzlich bzw. bewusst verzögert sondern weitergeleitet wird, sobald er dran ist und/oder weitergeleitet werden kann. Dran ist ein Frame insbesondere dann, wenn keine anderen Frames (mehr) vor ihm über einen gegebenen Sendeport weiterzuleiten sind.

Unter Traffic Shaping ist insbesondere eine Art der Warteschlangenverwaltung bei paketvermittelten Datennetzen zu verstehen, bei dem nach bestimmten Kriterien die Datenpakete verzögert werden, um bestimmten Anforderungen zu genügen. Traffic-Shaping ist in der Regel eine Form der Datenbegrenzung. Für ein Traffic-Shaping kann beispielsweise der genannte Credit Based Shaper (CBS) zum Einsatz kommen.

Das erfindungsgemäße Kommunikationsgerät ist entsprechend insbesondere ausgebildet und/oder eingerichtet, um empfangene Datenframes zum frühestmöglichen Zeitpunkt, bevorzugt ohne zusätzliche Verzögerung weiterzuleiten.

Ein weiterer Gegenstand der Erfindung ist ein Computerprogramm, das Programmcodemittel zur Durchführung der Schritte des erfindungsgemäßen Verfahrens zur Datenübertragung umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Datenübertragung durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Teildarstellung eines industriellen Netzwerks mit mehreren Netzwerkknoten;
- FIG 2: eine rein schematische Darstellung zu einem Szenario, in dem drei Anwendungen ohne Abstimmung Netzwerkressourcen an den Netzwerkknoten aus FIG 1 reservieren;
- FIG 3: eine rein schematische Darstellung zu möglichen Überlagerungen von Datenpaketen aus aufeinanderfolgenden Zyklen;
- FIG 4: eine rein schematische Darstellung zur Bestimmung der maximalen Latenz bis zu einem Netzwerkknoten;
- FIG 5: eine rein schematische Darstellung zur Vergrößerung der maximalen Latenz aufgrund von Überlagerungen;
- FIG 6: eine rein schematische Darstellung zur Weiterleitung von Datenpaketen mit Credit Based Shaper;
- FIG 7: eine rein schematische Darstellung zur minimalen und maximalen Latenz bis zu den Netzwerkknoten aus FIG 1 und zur Verlängerung des Daten-Update-Zyklus zur Vermeidung von Überlagerungen;
- FIG 8: eine rein schematische Darstellung zur minimalen und maximalen Latenz bis zu den Netzwerkknoten aus FIG 1 und zur n-fachen Reservierung mit n=2;
- FIG 9: eine rein schematische Darstellung der für das Szenario gemäß FIG 8 resultierenden Bandbreite für zwei Streams mit unterschiedlich hohem Ressourcenbedarf;
- FIG 10: eine rein schematische Darstellung zur Reservierung n-facher Ressourcen für n=1 bis n=3 für einen Stream;
- FIG 11: eine rein schematische Darstellung zur Reservierung n-facher Ressourcen für n=1 bis n=3 für zwei Streams;
- FIG 12: das Szenario gemäß FIG 1, wobei reservierte Ressourcen rein schematisch neben den Netzwerkknoten dargestellt sind;
- FIG 13: eine rein schematische Darstellung zur minimalen und maximalen Latenz bis zu insgesamt sieben Netzwerkknoten;
- FIG 14: eine rein schematische Darstellung der für das Szenario gemäß FIG 13 resultierenden Bandbreite für einen Stream;
- FIG 15: eine zu FIG 1 analoge Konstellation jedoch mit sieben Netzwerkknoten;
- FIG 16: eine rein schematische Darstellung zur minimalen und maximalen Latenz bis zu den Netzwerkknoten aus FIG 15 und zum Daten-Update-Zyklus des ersten Streams;
- FIG 17: eine rein schematische Darstellung zur minimalen und maximalen Latenz bis zu den Netzwerkknoten aus FIG 15 und zum Daten-Update-Zyklus des zweiten Streams; und
- FIG 18: eine rein schematische Darstellung der für das Szenario gemäß FIG 13 resultierenden Bandbreite für beide Streams.

Gleiche Elemente sind in den Figuren mit gleichen Bezugszeichen versehen.

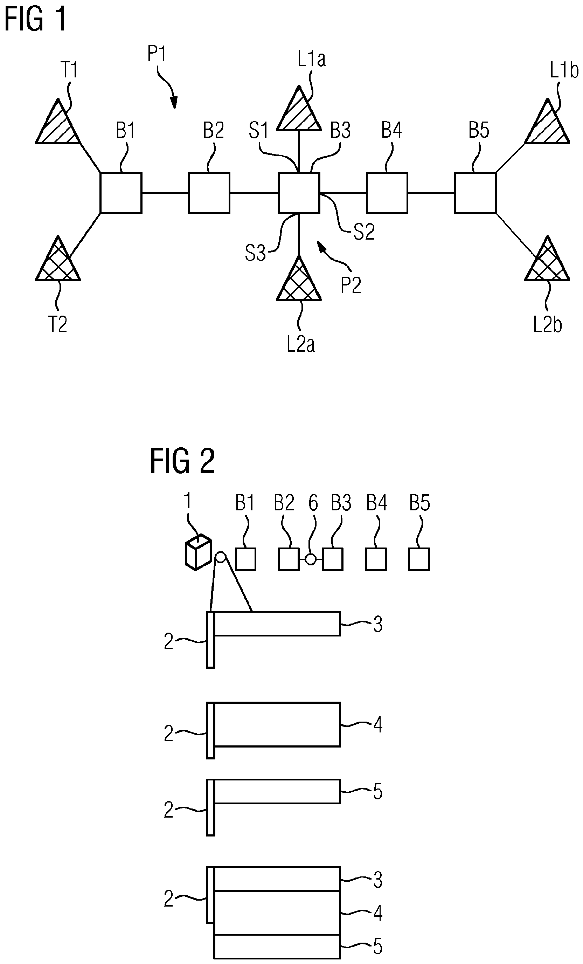

Die FIG 1 zeigt eine rein schematische Teildarstellung eines industriellen Ethernet-basierten Netzwerkes. Konkret sind von diesem fünf Netzwerkknoten B1-B5 dargestellt, die durch Bridges gegeben sind, sowie insgesamt sechs Endgeräte T1, L1a, L1b, T2, L2a, L2b, die über die Bridges B1-B5 miteinander verbunden sind.

Die beiden Endgeräte T1 und T2 stellen sendende Stream-Teilnehmer (Talker) dar, die periodisch Datenframes über eine geschützte Verbindung als Streams an einen oder mehrere empfangende Stream-Teilnehmer (Listener) L1a, L1b, L2a, L2b senden möchten. Dabei soll für die Datenübertragung von dem Talker T1 zu den Listenern L1a und L1b ein Stream eingerichtet werden und für die Datenübertragung von dem Talker T2 an die Listener L2a und L2b ein zweiter Stream. Die Unterscheidung von Streams kann in an sich bekannter Weise über Stream-IDs erfolgen, die den jeweiligen Streams zugeordnet sind. In FIG 1 sind die zum ersten Stream gehörigen Teilnehmer T1, L1a, L1b mit einfacher Schraffur und die zum zweiten Stream gehörigen Teilnehmer T2, L2a, L2b mit doppelter, gekreuzter Schraffur dargestellt.

Der Übertragungsweg bzw. Pfad P1 vom Talker T1 zum Listener L1a geht über die Netzwerkknoten B1, B2 und B3. Dieser Pfad P1 wird auch für die Übertragung von Datenpaketen von dem Talker T2 zu dem Listener L2a verwendet. Die beteiligten Netzwerkknoten für die Übertragung vom Talker T1 zum Listener L1a sowie Talker T2 zum Listener L2a sind somit die Bridges B1, B2 und B3. Für die Übertragung von Daten von den Talker T1 zu dem Listener L1b sowie von dem Talker T2 zu dem Listener L2b werden alle fünf dargestellten Netzwerkknoten B1-B5 benötigt. Der Pfad P2 für diese Übertragung wird somit durch die Knoten B1-B5 definiert bzw. diese liegen auf dem Pfad P2. Die beteiligten Netzwerkknoten für diese Übertragung sind entsprechend die Netzwerkknoten B1-B5. Der Pfad P1 liegt erkennbar vollständig auf dem Pfad P2 bzw. bildet den ersten Abschnitt des Pfades P2.

Die Datenübertragung vom Talker T1 an die Listener L1a und L1b dient einer bzw. erfolgt im Rahmen einer ersten Anwendung und die Datenübertragung vom Talker T2 an die Listener L2a und L2b einer zweiten Anwendung. Vorliegend handelt es sich bei beiden Anwendungen um Steueranwendungen, wobei dies rein beispielhaft zu verstehen ist.

Bei den beiden Talkern T1, T2 handelt es sich vorliegend um speicherprogrammierbare Steuerungen einer nicht weiter dargestellten industriellen Automatisierungsanlage, die im gleichen Netzwerk betrieben werden und die periodisch Steuersignale an Aktoren in Echtzeit übertragen möchten, damit über die Aktoren auf einen in der Figur ebenfalls nicht dargestellten industriellen Prozess eingewirkt werden kann. Die Listener L1a, L1b, L2a, L2b sind durch in Form IO-Geräten gegeben, die jeweils wenigstens einen Aktor umfassen oder mit einem solchen verbunden sind. Es sei betont, dass dies rein beispielhaft zu verstehen ist, und sowohl Listener als auch Talker von Streams in industriellen Netzwerken alternativ oder zusätzlich auch durch andere Geräte bzw. Einheiten gegeben sein können, etwa Bildschirme, Eingabegeräte oder dergleichen.

Gemäß AVB ist es möglich, einen Stream in einem Netzwerk besonders zu schützen und eine Übertragung innerhalb einer gewissen Latenz zu garantieren. Dabei kann ein Reservierungsprotokoll für eine automatische Konfiguration zum Einsatz kommen. Durch das Reservierungsprotokoll werden in Reaktion auf eine Stream-Bekanntgabe, welche eine Reservierungsanfrage umfasst bzw. darstellt , alle zur Datenübertragung benötigten Netzwerkressourcen, wie beispielsweise Filter-Database-Einträge (FDB-Eintrag), Queue-Speicher, Bandbreite insbesondere Linkbandbreite, insbesondere am Sendeport, an den beteiligten Netzknoten B1-B5 auf dem Übertragungsweg geprüft und, sofern verfügbar, teilweise vorbelegt und bei der Anmeldung eines Listeners durch eine Stream-Anmeldung für die Übertragung der Streamdaten reserviert. Time Sensitive Networking (TSN) stellt eine Erweiterung dar, welche insbesondere Mechanismen zur Übertragung echtzeitkritischer Daten über Ethernet-Netze ermöglicht.

Im Zusammenhang mit der Reservierung von Netzwerkressourcen sind verschiedene Szenarien bekannt, mit denen unterschiedliche Problemen einhergehen können.

Erfolgt beispielsweise eine Reservierung von Netzwerkressourcen, findet jedoch in einem Szenario gemäß FIG 1, bei dem nicht nur eine Anwendung das Netzwerk nutzt, sondern zwei (oder auch mehr) Anwendungen die Netzwerkknoten B1-B5 für die Datenweiterleitung der zugehörigen Streams benötigen, keine "Abstimmung" der Reservierung, kann es zu Problemen wie Überlast, Paketverlusten und unbekannter Latenz kommen.

Dies ist - rein schematisch - in FIG 2 veranschaulicht. In dieser sind oben rein beispielhaft ein Endgerät 1 in Form eines Computers und daneben nochmals die fünf Netzwerkknoten B1-B5 gezeigt. Darunter ist einerseits rein schematisch durch einen Balken 2 gegebener Ausdehnung die Bandbreite eines Links im Netzwerk dargestellt, und rechts daneben ebenfalls jeweils durch einen Balken die benötigte bzw. genutzte Bandbreite für insgesamt drei Anwendungen, die auf dem Endgerät 1 laufen und für die bzw. im Rahmen derer Datenframes über die Bridges B1-B5 zu einem Ziel weiterzuleiten sind. Die Bandbreiten der ersten, zweiten und dritten Anwendung sind mit den Bezugszeichen 3, 4 bzw. 5 versehen. An der mit dem Bezugszeichen 6 versehenen Stelle im Netzwerk, konkret zwischen den Bridges B2 und B3 beispielsweise, kann die ganz unten in der FIG 2 dargestellte Situation auftreten, nämlich, dass die Bandbreiten 3, 4, 5 der drei Anwendungen zusammengenommen die Bandbreite 2 des Links im Netzwerk übersteigen, so dass es zur Überlast, Paketverlusten und unbekannter Latenz kommen kann.

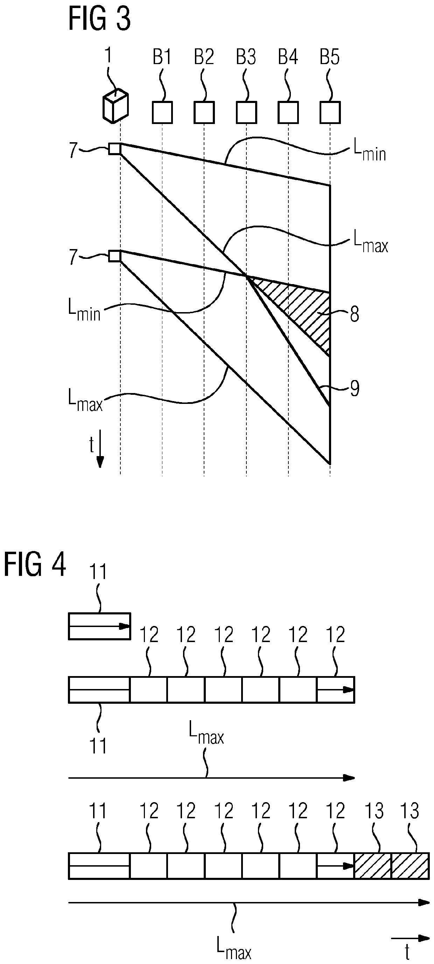

Die FIG 3 zeigt eine weitere Problematik auf, konkret, dass es an einen oder mehreren Netzwerkknoten B1-B5 aufgrund des periodischen bzw. zyklischen Sendens der Stream-Datenpaketen 7 zu einer Überlagerung von aus aufeinanderfolgenden Sendezyklen bzw. Sendevorgängen stammenden Datenpaketen 7 kommen kann. Es sei angemerkt, dass diese Problematik auch besteht, wenn nur eine Anwendung ein Netzwerk nutzt bzw. nutzen möchten, es insbesondere nur einen Stream gibt bzw. geben soll. Die Überlagerung von periodischen Paketen 7 aus verschiedenen Phasen kann lokal zu Problemen führen kann, insbesondere zu einer deutlich größeren Latenz pro Hop. Zwei (oder mehr) sich treffende Datenpakte 7 stellen eine mehrfache Belegung der Reservierung bzw. der reservierten Ressourcen dar. Im Rahmen des vorbekannten, konventionellen Reservierungsvorganges wird jedoch nur eine einfache Belegung betrachtet.

In der FIG 3 sind zur weiteren Veranschaulichung dieser Problematik beispielhaft für zwei nacheinander gesendete Datenpakete 7 jeweils die minimale (akkumulierte) Latenz Lₘᵢₙ und die maximale (akkumulierte) Latenz Lₘₐₓ als durchgezogene Linie dargestellt. Die Zeitachse verläuft in der FIG 3 vertikal, was durch einen entsprechenden Pfeil mit danebenstehendem Buchstaben "t" angedeutet ist. In dem dargestellten Szenario ist es, wie man erkannt, möglich, dass sich ab dem dritten Netzwerkknoten B3 ein Datenpaket 7 aus einem vorangegangenen Sendezyklus, welches besonders langsam weitergeleitet wird, insbesondere mit der maximal möglichen (akkumulierten) Latenz, mit einem Datenpaket 7 aus dem folgenden Zyklus, welches ohne Probleme, insbesondere mit der minimalen (akkumulierten) Latenz Lₘᵢₙ weitergeleitet wird, trifft. Dies ist daran erkennbar, dass sich unterhalb der dritten Bridge B3 die mit Lₘₐₓ bezeichnete Linie des früheren Datenpakets 7 mit der mit Lₘᵢₙ bezeichneten Linie des späteren Datenpaketes 7 schneidet. In dem mit dem Bezugszeichen 8 versehenen schraffierten Bereich kann es entsprechend zu einer Überlast kommen, welche die "Worst-Case-Latenz" pro Hop erhöht. Dies ist durch die mit dem Bezugszeichen 9 versehene Linie angedeutet, welche die in Folge möglicher Überlast vergrößerte "Worst-Case-Latenz" repräsentiert.

Die FIG 4 enthält eine rein schematische Veranschaulichung zur "Worst-Case-Berechnung" in jedem Netzwerkknoten B1-B5. Für die maximale (akkumulierten) Latenz Lₘₐₓ₁-Lₘₐₓ₅ ist einerseits die Zeit zu berücksichtigten, bis zu der die Paketübertragung möglich ist. Diese ist in der FIG 4 durch eine mit dem Bezugszeichen 11 versehenen Balken dargestellt. Darüber hinaus ist zu berücksichtigen, dass Datenpakete 7 anderer Streams mit gleicher oder höherer Priorität existieren können, die von einem Netzwerkknoten B1-B5 vorher weitergeleitet werden. In der rein bespielhaften Darstellung in FIG 4 ist ein Szenario gezeigt, bei dem sechs Datenpakte 7 der gleichen oder einer höheren Priorität vorliegen. Die für das Senden dieser Datenpakete benötigte Zeit ist durch mit dem Bezugszeichen 12 versehene Balken angedeutet. Die maximale Latenz Lₘₐₓ₁-Lₘₐₓ₅ ergibt sich aus der Summe der Zeit bis die Datenübertragung möglich ist, und den Zeiten, welche für die Datenübertragung von Datenpaketen 7 mit höherer oder gleicher Priorität notwendig ist, also die Summe aus den Balken 11 und den Balken 12.

Es sei angemerkt, dass bevorzugt für die Streams die höchste Priorität gewählt bzw. verwendet wird, um den Einfluss durch höhere Prioritäten zu vermeiden. Es ist jedoch auch möglich, dass noch höhere Prioritäten bzw. Streamklassen mit solchen existieren, sofern deren Charakteristik bekannt ist. Insbesondere sollte die maximale Größe und Anzahl an Datenframes pro Zeitfenster dann bekannt und begrenzt sein.

Treten Überlagerungen von Datenpaketen 7 aufeinanderfolgenden Sendezyklen auf, kann es dazu kommen, dass nicht nur die maximal mögliche Anzahl von Datenpaketen 7 mit höherer Priorität bevorzugt weitergeleitet wird, sondern zusätzlich weitere Pakete 7 aus einem oder auch mehreren nachfolgenden Zyklen. Die für diese benötigte Zeit ist in der FIG 4 durch mit dem Bezugszeichen 13 versehene, schraffierte Balken angedeutet. Bei dem dargestellten Szenario wird davon ausgegangen, dass an einem Netzwerkknoten B1 - B5 aufgrund der Überlagerungsproblematik zwei zusätzliche Datenpakete 7 vorliegen können.

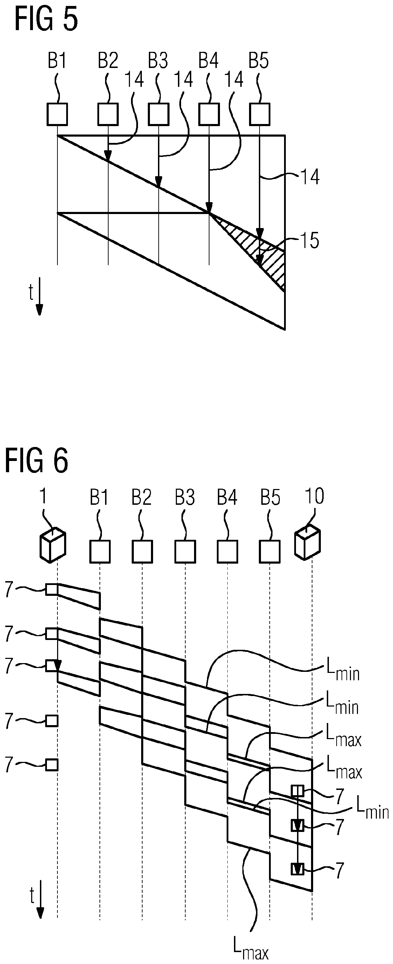

Die FIG 5 zeigt neben den fünf Netzwerkknoten B1-B5 rein schematisch einerseits die berechnete maximale Latenz Lₘₐₓ für den jeweiligen Netzwerkknoten B1-B5 durch mit der Bezugsziffer 14 versehene Pfeile sowie die maximale zusätzliche, durch die Überlagerungsmöglichkeit bedingte zusätzliche maximale Latenz durch einen mit dem Bezugszeichen 15 versehenen Pfeil.

Aus dem Stand der Technik ist eine Möglichkeit vorbekannt, die Überlagerung von periodischen Paketen aus verschiedenen Phasen an Netzwerkknoten B1- B5 zu vermeiden. Hierfür können Shaper zum Einsatz kommen, insbesondere der sogenannte Credit Based Shaper (CBS), dessen Funktion in FIG 6 rein schematisch dargestellt ist. Der Credit Based Shaper sorgt dafür, dass beim Sendevorgang von Stream-Daten eine gewisse Pause nach jedem Datenpaket 7 eingehalten wird. Dadurch kann der nächste Netzwerkknoten B1- B5 auf dem Übertragungsweg sichergehen, dass es keinen Burst von Stream-Daten gibt und die ankommende Datenmenge der reservierten Bandbreite entspricht. Durch die vorgesehene Pause nach jedem Datenpaket 7 werden zu früh angekommene Pakete gezielt verzögert und damit eine Überlagerung verhindert.

In der FIG 6 ist ein Empfänger beispielhaft durch einen weiteren Rechner 10 hinter dem letzten Netzwerkknoten B5 dargestellt. Weiterhin gezeigt ist für drei nacheinander gesendeten Datenpakete 7 die akkumulierte minimale Latenz Lₘᵢₙ sowie die akkumulierte maximale Latenz Lₘₐₓ im Falle des Credit Based Shaper - in Analogie zu FIG 3 jeweils durch entsprechend benannte Linien. Man erkennt, dass aufgrund der gezielten Verzögerung durch den Shaper keine Überlagerungen auftreten. Durch den Shaper wird der Jitter durch eine Vergrößerung der minimalen Latenz verringert und die Überlagerungen werden so verhindert. Über eine Reservierung von Netzwerkressourcen in Kombination mit dem Shaper kann eine garantierte Quality of Service (QOS) bzw. Dienstgüte erzielt werden. Die Bandbreite bleibt überall erhalten, Datenpakete aus unterschiedlichen Zyklen treffen sich nicht.

Ein Nachteil an der Shaper-Funktion ist, dass die Netzwerkhardware, konkret die Netzwerkknoten B1-B5 speziell ausgebildet sein müssen, um diese Funktion unterstützen zu können. Viele bestehende insbesondere industrielle Netzwerke verfügen jedoch über keine solche besondere Hardware. Ein weiterer Nachteil von Shapern ist, dass sie, wenn eine möglichst geringe Latenz benötigt wird, eher ungeeignet sind, da diese die Datenpakete 7 zusätzlich verzögern.

Die vorliegende Erfindung bietet eine alternative Möglichkeit, um eine garantierte Quality of Service bzw. Dienstgüte für Streams auch ohne Nutzung von Shapern zu erhalten.

Zu den beiden einzurichtenden Streams gehört jeweils ein Daten-Update-Zyklus, der beispielsweise einige Millisekunden betragen kann, was bedeutet, dass alle paar Millisekunden ein Datenframe 7 unter Nutzung von an Netzwerkknoten B1-B5 reservierten Netzwerkressourcen zu den Listener L1a, L1b, L2a, L2b weitergeleitet werden soll.

Erfindungsgemäß wird der Daten-Update-Zyklus insbesondere im Rahmen der Ressourcen-Reservierung für die beteiligten Netzwerkknoten B1-B5 zusätzlich berücksichtigt.

Der Daten-Update-Zyklus des jeweiligen Streams kann seitens der jeweiligen Anwendung, für welche bzw. bzw. im Rahmen derer die Stream-Datenübertragung zu erfolgen hat, bereitgestellt werden. Vorliegend wird er den Netzwerkknoten B1-B5 über die Stream-Bekanntgabe, insbesondere die Stream-Advertise-Nachricht für den jeweiligen Stream, die von dem jeweiligen Talker T1, T2 gesendet wird, mitgeteilt.

Der Daten-Update-Zyklus wird dann von jedem beteiligten Netzwerkknoten auf jedem Pfad P1, P2, also vorliegend allen Knoten B1-B5, mit der Latenz-Differenz ΔL1-ΔL5 des jeweiligen Netzwerkknotens B1-B5 verglichen. Es sei angemerkt, dass in dem Falle mehrere Streams bzw. Anwendungen die Stream-Einrichtung nacheinander, Stream für Stream erfolgt, wobei im Rahmen der Einrichtung des jeweiligen Streams der zu dem jeweiligen Stream gehörige Daten-Update-Zyklus zu betrachten ist. Im Folgenden werden die Abläufe beispielshaft für den ersten Stream mi dem Talker T1 und den Listenern L1a, L1b beschrieben. Für den zweiten Stream sind die Abläufe völlig analog.

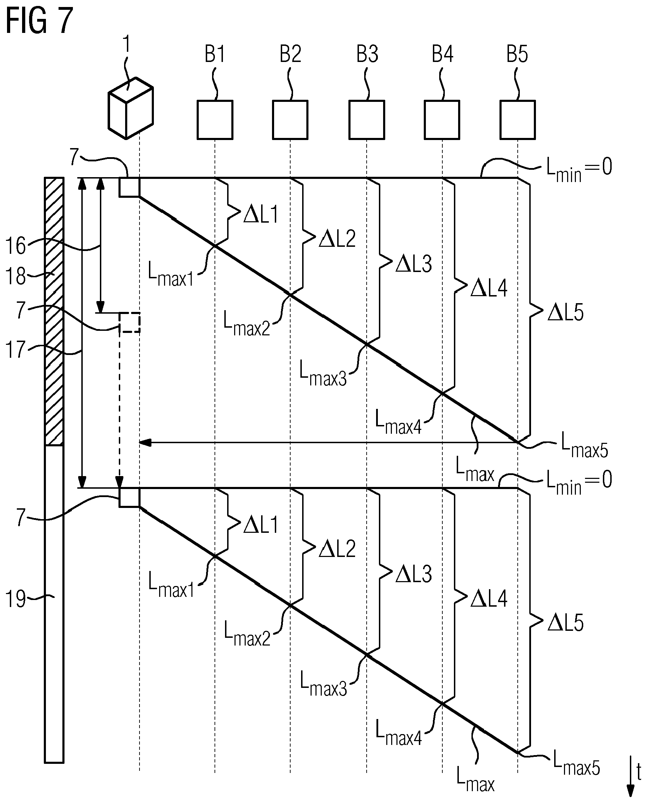

Die Latenz-Differenzen ΔL1-ΔL5, die in FIG 7 dargestellt sind, werden erhalten, indem von der maximalen (akkumulierten) Latenz Lₘₐₓ₁ - Lₘₐₓ₅ bis zu dem jeweiligen Netzwerkknoten B1-B5 die minimale (akkumulierte) Latenz Lₘᵢₙ bis zu dem jeweiligen Netzwerkknoten B1-B5 subtrahiert wird. Die maximale (akkumulierte) Latenz Lₘₐₓ₁ - Lₘₐₓ₅ kann unter Verwendung der Stream-Bekanntgabe, die von dem Talker T1 gesendet wird, ermittelt werden. Diese Vorgehensweise ist aus dem Stand der Technik vorbekannt.

Die minimale akkumulierte Latenz Lₘᵢₙ zu dem jeweiligen Netzwerkknoten B1-B5 kann aus Gründen der Vereinfachung mit 0 angesetzt werden, was bei dem dargestellten Ausführungsbeispiel, wie in FIG 7 erkennbar, der Fall ist. Dies bedeutet mit anderen Worten, dass die Latenz-Differenz ΔL1-ΔL5 jeweils der bis zu dem jeweiligen Netzwerkknoten B1-B5 maximalen akkumulierten Latenz Lₘₐₓ entspricht. Die Latenz-Differenzen ΔL1-ΔL5 wachsen naturgemäß mit steigendem Abstand von dem Sender bzw. Talker, also in FIG 7 dem Endgerät 1, bzw. in FIG 1 dem Talker T1 von Knoten zu Knoten B1-B5 an.

Sofern der Vergleich der Latenz-Differenz ΔL1-ΔL5 des jeweiligen Netzwerkknotens B1-B5 mit dem Daten-Update-Zyklus des Streams, der bzw. dessen Länge in FIG 7 durch einen mit dem Bezugszeichen 16 versehenen Doppelpfeil dargestellt ist, ergibt, dass der Daten-Update-Zyklus 16 größer oder gleich der Latenz-Differenz ΔL1-ΔL5 des jeweiligen Netzwerkknotens B1-B5 ist, wird die Reservierungsanfrage bzw. die Reservierung für den jeweiligen Netzwerkknoten B1-B5 angenommen.

Für den Fall, dass das Ergebnis ist, dass die Latenz-Differenz ΔL1-ΔL5 eines Netzwerkknotens B1-B5 kleiner als der Daten-Update-Zyklus 16 ist, existieren zwei insbesondere alternative Vorgehensweisen.

Einerseits kann vorgesehen sein, dass die Reservierungsanfrage für den jeweiligen, insbesondere von dem jeweiligen betroffenen Netzwerkknoten B1-B5 abgelehnt werden, dies auch, wenn ausreichend Ressourcen gemäß der Reservierungsanfrage verfügbar sind. Dann wird bevorzugt der Daten-Update-Zyklus 16 insbesondere seitens der Anwendung, für welche bzw. im Rahmen welcher Daten über den (jeweiligen) einzurichtenden Stream übertragen werden sollen, gezielt verlängert, bis er der größten Latenz-Differenz aller am Stream beteiligter Netzwerkknoten B1-B5, also vorliegend der Latenz-Differenz ΔL5 des Netzwerkknotens B5 entspricht oder diese übersteigt.

Diese Variante ist ebenfalls in FIG 7 angedeutet. Der entsprechend verlängerte Daten-Update-Zyklus ist durch einen weiteren, mit dem Bezugszeichen 17 versehenen Doppelpfeil dargestellt. Weiterhin ist über eine gestrichelte Darstellung des nächsten bzw. zweiten Datenpaktes 7 und einen gestrichelten Pfeil bis zu einem späteren Zeitpunkt veranschaulicht, dass das Datenpaket 7 aufgrund des verlängerten Daten-Update-Zyklus 17 zu einem im Vergleich späteren Zeitpunkt beim Endgerät 1 abgesendet wird.

Ganz links in FIG 7 sind zwei Balken 18 und 19 dargestellt, von denen der obere schraffierte Balken den Bereich für im Vergleich zur höchsten Latenz-Differenz ΔL5 zu kurzen Daten-Update-Zyklen 16 und der Untere den Bereich von ausreichend langen Daten-Update-Zyklen 17, zur Vermeidung von Überlagerungen andeuten soll.

Es sei angemerkt, dass in dem dargestellten Szenario die ersten zwei Netzwerkknoten B1 und B2 aus Sicht des Talkers T1 die Reservierungsanfrage noch annehmen bzw. bestätigen, da für diese die Bedingung, dass der Daten-Update-Zyklus 16 größer als ΔL1, ΔL2 ist, noch erfüllt ist. Für den dritten, vierten und fünften Netzwerkknoten B3, B4 und B5 ist diese jedoch nicht mehr erfüllt und es wird insbesondere in Reaktion darauf der Daten-Update-Zyklus 16 in ausreichendem Maße erhöht.

Aufgrund der Erhöhung des Daten-Update-Zyklus 16 auf bzw. über die höchste Latenz-Differenz ΔL5 wird sichergestellt, dass sich keinen Datenpakete 7 aus aufeinanderfolgenden Zyklen treffen und dadurch bedingte Paketverluste bzw. Latenz-Erhöhungen können zuverlässig vermieden werden.

Im Anschluss an die ausreichende Verlängerung des Daten-Update-Zyklus 16 auf den Daten-Update-Zyklus 17 werden an allen beteiligten Netzwerkknoten B1-B5 die Ressourcen gemäß der bzw. im Umfang der Reservierungsanfrage reserviert. Eine Datenübertragung über den Stream kann im Anschluss erfolgen.

Es sei angemerkt, dass alternativ oder zusätzlich zu einer Erhöhung des Daten-Update-Zyklus 16 auch eine andere Stream-Klasse gewählt werden kann, für welche sich eine geringere Latenz-Differenz ΔL1-ΔL5 für die beteiligten Netzwerkknoten B1-B5 ergibt. Dann wird bevorzugt eine Stream-Klasse gewählt, für die gilt, dass die größte Latenz-Differenz ΔL5 der beteiligten Netzwerkknoten B1-B5 kleiner oder gleich dem Daten-Update-Zyklus 16 ist.

Alternativ dazu, dass die Reservierungsanfrage abgelehnt und ggf. der Daten-Update-Zyklus 16 verlängert und/oder eine Stream-Klasse mit geringerer Latenz gewählt wird, kann auch vorgesehen sein, dass für den Fall, dass die Latenz-Differenz ΔL1-ΔL5 eines Netzwerkknotens B1-B5 kleiner als der Daten-Update-Zyklus 16 ist, der Daten-Update-Zyklus 16 unverändert bleibt und der bzw. die betroffene(n) Netzwerkknoten B1-B5 als Überlagerungs-Netzwerkknoten B3, B4, B5 betrachtet wird bzw. werden und versucht wird, eine angepasste Reservierung durchzuführen.

Vorliegend würden entsprechend die Netzwerkknoten B3, B4 und B5 als Überlagerungs-Netzwerkknoten betrachtet. An diesen kann es dazu kommen, dass sich zwei Datenpakete 7 aus aufeinander folgenden Zyklen des Streams im Lichte der Latenz-Differenz ΔL3, ΔL4, ΔL5 und des Daten-Update-Zyklus 16 treffen.

Gemäß der zweiten Alternative wird diese Möglichkeit einer Überlast-Situation in Kauf genommen und versucht, an den betroffenen Netzwerkknoten B3, B4, B5 zusätzliche, also mehr Ressourcen zu reservieren. Konkret wird versucht, an den Überlagerungs-Netzwerkknoten B3, B4, B5 n mal so viel Ressourcen zu reservieren, wie gemäß der Reservierungsanfrage vorgesehen bzw. erforderlich ist.

n ist dabei eine ganze Zahl, die für jeden Überlagerungs-Netzwerkknoten B3, B4, B5 bestimmt wird, indem die Latenz-Differenz ΔL3, ΔL4, ΔL5 des bzw. für den jeweiligen Überlagerungs-Netzwerkknotens B3, B4, B5 durch den Daten-Update-Zyklus 16 dividiert wird, und der erhaltene Wert, sofern er nicht bereits eine ganze Zahl darstellt, auf die nächstgrößere ganze Zahl aufgerundet wird. n ist entsprechend eine ganze Zahl für die gilt n >= ΔL/Daten-Update-Zyklus, unter der Annahme Lₘᵢₙ=0 gilt n >= Lₘₐₓ/Daten-Update-Zyklus.

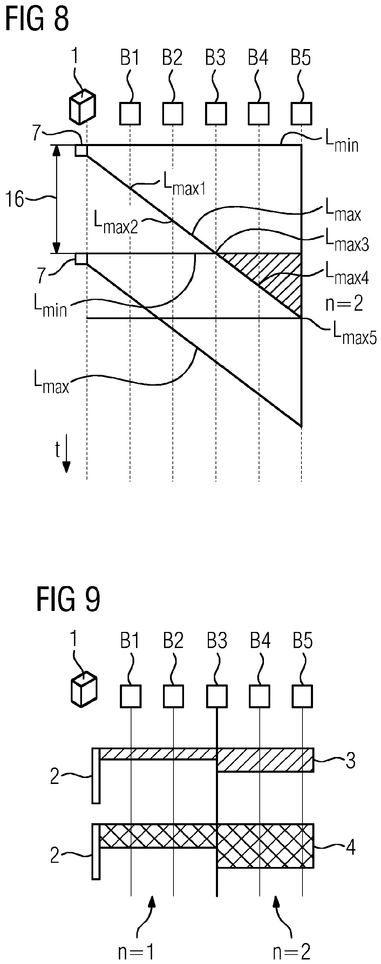

Bei dem in FIG 8 dargestellten Szenario erhält man für den beispielhaft dargestellten Daten-Update-Zyklus 16, und die Latenz-Differenzen ΔL3, ΔL4, ΔL5 für sämtliche Überlagerungs-Netzwerkknoten B3, B4, B5 n=2. Entsprechend wird versucht, an den Überlagerungs-Netzwerkknoten B3, B4, B5 doppelt so viel Ressourcen zu reservieren, als gemäß der Reservierungsanfrage vorgesehen, beispielsweise doppelt so viel Bandbreite, insbesondere Linkbandbreite am Eingangsport.

Stehen an den Überlagerungs-Netzwerkknoten B3, B4, B5 ausreichend Netzwerkressourcen für die doppelte Reservierung zur Verfügung, kann diese erfolgen und nach der erfolgreichen Reservierung an allen Netzwerkknoten B1-B5 können die Datenpakete 7 über den jeweiligen Stream weitergeleitet werden.

Sollen zwei Streams eingerichtet werden (Szenario gemäß FIG 1) oder auch mehr Streams eingerichtet werden, erfolgt der Reservierungsablauf, wie angemerkt, zweckmäßigerweise nacheinander Stream für Stream. Dabei kann es vorkommen, dass eine Reservierung für einen ersten Stream beispielsweise an sämtlichen Netzwerkknoten B1-B5 erfolgreich ist, da noch ausreichend Ressourcen, auch für n-fache Reservierungen, vorhanden sind, jedoch für einen weiteren Stream von einem, mehreren oder auch allen Netzwerkknoten B1-B5 die ggf. n-fache Reservierung abgelehnt wird.

In FIG 9 ist in Analogie zu FIG 2 die Bandbreite der Links im Netzwerk als mit der Bezugsziffer 2 versehener Balken angedeutet. Rechts daneben ist - für das Szenario gemäß FIG 8 - die für den ersten Stream an dem jeweiligen Knoten B1-B5 benötigte Bandbreite 3 einfach und die für den zweiten Stream an dem jeweiligen Knoten B1-B5 benötigte Bandbreite 4 doppelt bzw. gekreuzt schraffiert dargestellt. Es sei angemerkt, dass die Figuren 8 und 9 auf der Annahme basieren, dass beide Streams den gleichen Daten-Update-Zyklus haben, so dass sich für beide Streams die gleichen Überlagerungs-Netzwerkknoten B3-B5 und die gleichen Werte für n ergeben.

Wie man in FIG 9 erkennt, benötigt der erste Stream eine geringere und der zweite Stream eine höhere Bandbreite 3, 4. Weiterhin erkennt man, dass für n=1, also an den Knoten B1 und B2 ausreichend Bandbreite für beide Streams zur Verfügung steht. Ab dem dritten Knoten B3 wird wegen der Möglichkeit der Überlagerung von Datenpaketen 7 versucht, doppelt so viel Ressourcen zu reservieren, wie ursprünglich vorgesehen (n=2). Für den ersten Stream stehen auch in diesem Fall ausreichend Ressourcen zur Verfügung (vgl. mit dem mit der Bezugsziffer 2 versehenen Balken). Dies gilt auch für die noch folgenden beiden Überlagerungs-Netzwerkknoten B5 und B6.

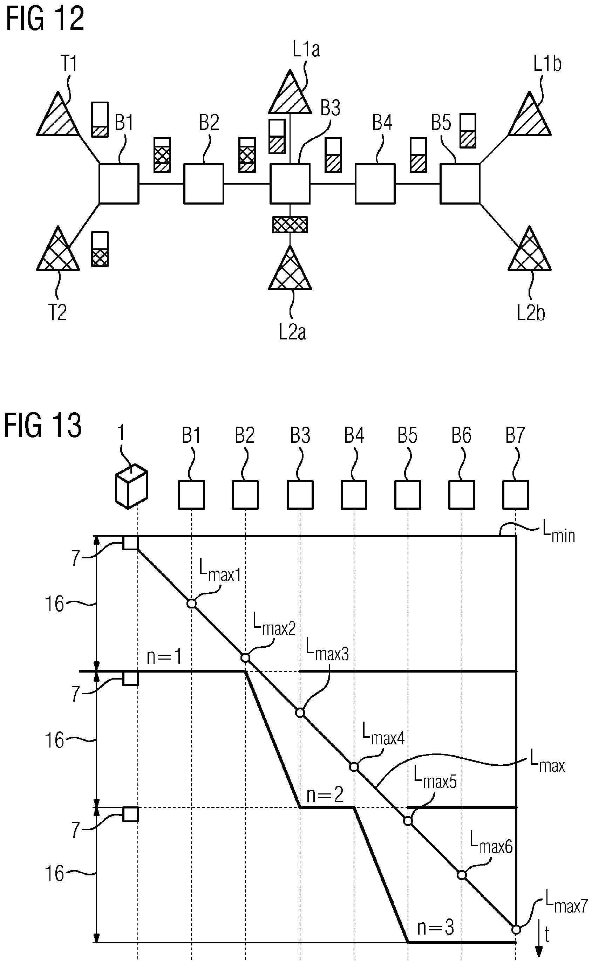

Im Rahmen der Abwicklung der Reservierung für den zweiten Stream ist eine Reservierung an den ersten drei Netzwerkknoten B1 und B2 noch möglich, an denen n=1 gilt. Auch an dem ersten Überlagerungs-Netzwerkknoten B3 ist eine Reservierung mit n=2 für den zweiten Stream für einen der Ausgangs-/Sendeports S1, S2, S3, die zu betrachten sind, erfolgreich. Generell gilt, dass alle für den jeweiligen Sendeport S1, S2, S3 anfallenden Daten übertragen werden müssen und such entsprechend in der Queue für den Sendeport S1, S2, S3 treffen/stauen. Die Reservierung an dem in FIG 12 nach unten weisenden Sendeport S3 des Netzwerkknotens B3 ist erfolgreich, da hier nur der zweite Stream an den Listener L2a zu übertragen ist und die vorhandenen Ressourcen für eine Reservierung mit n=2 nur für den zweiten Stream reichen. Ab dem in FIG 12 nach rechts weisenden Sendeport S2 von dem dritten Netzwerkknoten B3 steht jedoch nicht mehr ausreichend Bandbreite zur Verfügung, um zusätzlich zu der doppelten Bandbreite für den ersten Stream auch noch die doppelte Bandbreite für den zweiten Stream zu reservieren. An den Sendeport S2 des Überlagerungs-Netzwerkknoten B3 sowie den Knoten B4 und B5 ist die zusätzliche Reservierung daher nicht erfolgreich und es kann keine Übertragung vom zweiten Stream an den Listener L2b erfolgen.

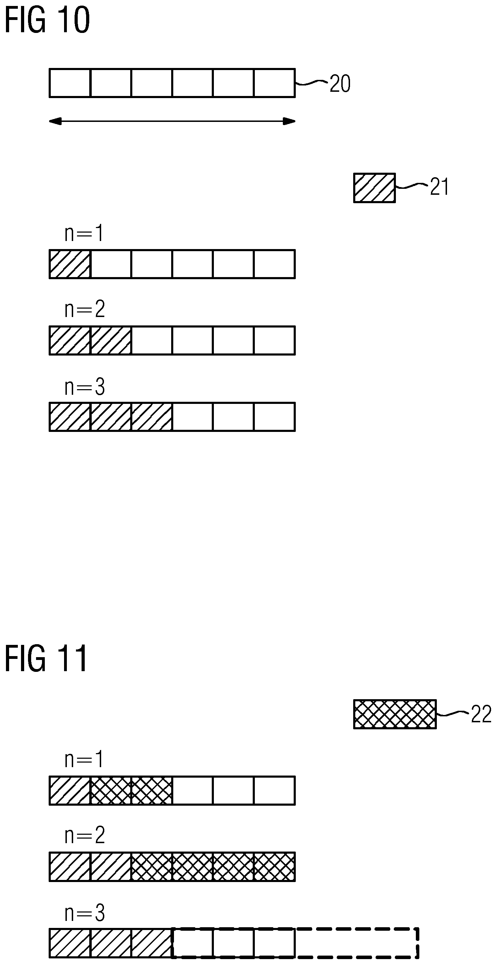

In den Figuren 10 und 11 ist das Szenario mit n-facher Reservierung noch weiter veranschaulicht. Gezeigt ist - rein schematisch und beispielhaft für einen Netzwerkknoten B1-B5 - die an dem Netzwerkknoten B1-B5 verfügbare Bandbreite in Form eines mit dem Bezugszeichen 20 versehenen Balkens. Es ist ferner der konventionelle Ressourcenbedarf, also derjenige gemäß der (ursprünglichen) Reservierungsanfrage, eines ersten und eines zweiten Streams beispielhaft durch ein mit dem Bezugszeichen 21 bzw. 22 versehenes Element angedeutet. Die Bandbreite 20 ist aus Gründen der besseren Veranschaulichung bzw. Vergleichbarkeit, in sechs Abschnitte unterteilt, deren Größe gerade dem einfachen Ressourcenbedarf 21 des ersten Streams entspricht. Der einfache Ressourcenbedarf 22 des zweiten Streams ist erkennbar doppelt so groß wie der des ersten. Wie man in der FIG 10 erkennt, ist für den ersten Stream eine Reservierung beispielsweise für n=1, n=2 und n=3 problemlos möglich, da genug Ressourcen verfügbar sind.

In FIG 11 ist die Situation für den Fall dargestellt, dass auch für den zweiten Streams versucht wird, Ressourcen mit n=1, n=2 und n=3 zu reservieren. Für n=2 ist dies noch mit Erfolg möglich. Für n=3 hingegen übersteigt der Ressourcenbedarf beider Streams zusammengenommen die zur Verfügung stehenden Ressourcen 20 der Knoten B1-B5.

Die FIG 12 zeigt nochmal das Szenario gemäß FIG 1, wobei die Bandbreitensituation an den einzelnen Netzwerkknoten B1-B5 durch daneben dargestellte Balken an den Sende-/Ausgangsports bei den Knoten angedeutet ist.

Die FIG 13 zeigt - in Analogie zu Figuren 7 und 8 - den Daten-Update-Zyklus 16 und die maximalen Latenzen Lₘₐₓ₁-Lₘₐₓ₇ für ein Szenario, gemäß dem Stream-Datenframes über mehr als fünf, konkret sieben Netzwerkknoten B1-B7 von einem Talker zu einem (oder mehreren) Listenern zu übertragen sind. In der FIG 13 oben ist wieder beispielhaft und rein schematisch ein Computer 1 gezeigt, von dem Datenframes via Stream zu senden sind, und daneben sind die sieben Knoten B1-B7 zu erkennen, welche diese weiterzuleiten haben. Gemäß dem dargestellten Szenario ergibt sich aufgrund des Verhältnisses von dem Daten-Update-Zyklus 16 und der jeweiligen maximalen Latenz Lₘₐₓ₁-Lₘₐₓ₇ (die im Lichte von Lₘₘ=0 den Latenz-Differenz ΔL1-ΔL7 entsprechen), dass für die Knoten B1 und B2 einfache Ressourcen ausreichen (n=1), für die Knoten B3 und B4 zweifache Ressourcen (n=2) und für die Knoten B5, B6 und B7 dreifache Ressourcen (n=3) erforderlich sind bzw. versucht werden zu reservieren.

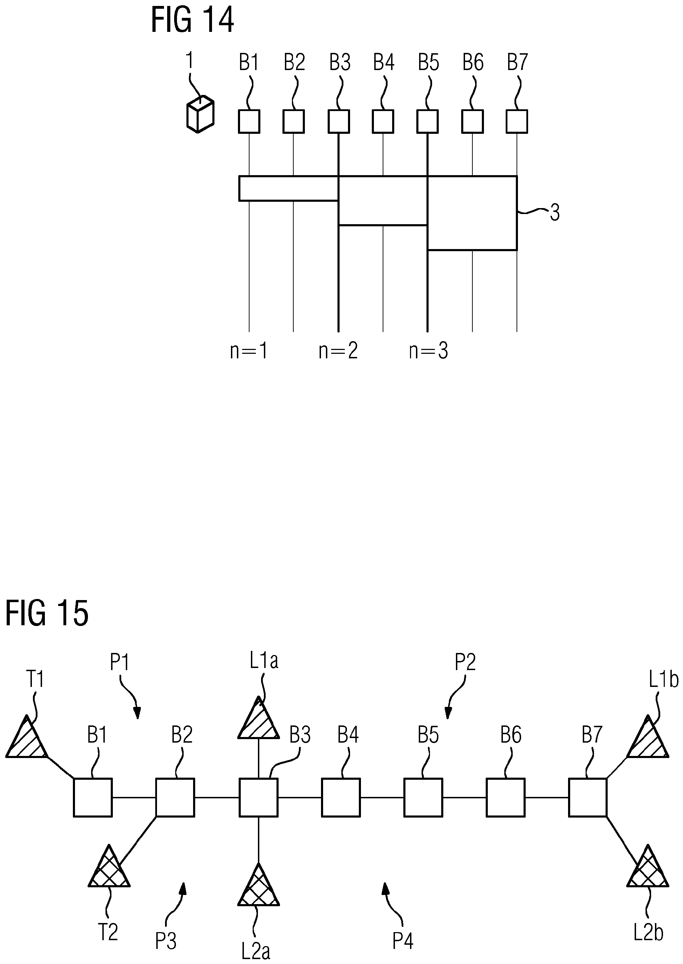

Welche Werte für n sich in diesem Szenario ergeben, ist auch in der FIG 14 dargestellt, die analog zu FIG 9 die resultierenden Bandbreiten zeigt. Eine maximale Bandbreite am Link im Netzwerk ist hier in Abweichung zu FIG 9 jedoch nicht dargestellt.

Die FIG 15 zeigt in Analogie zu der FIG 1 die beiden Talker T1 und T2 sowie vier Listener L1a, L2b, L2a, L2b, wobei jedoch die Teilnehmer T1, L1a, L1b vom ersten Stream über insgesamt sieben Netzwerkknoten B1-B7 miteinander verbunden sind und die Teilnehmer T2, L2a, L2b von zweiten Stream über sechs Netzwerkknoten B2-B7. Der Pfad P1 von Talker T1 zu Listener L1a geht hier über die Knoten B1, B2 und B3, der Pfad P2 vom Talker 1 zum Listener L1b über die Knoten B1-B7, der Pfad P3 vom Talker T2 zum Listener L2a über die Knoten B2, B3 und der Pfad P4 vom Talker T2 zum Listener T2b über die Knoten B2-B7.

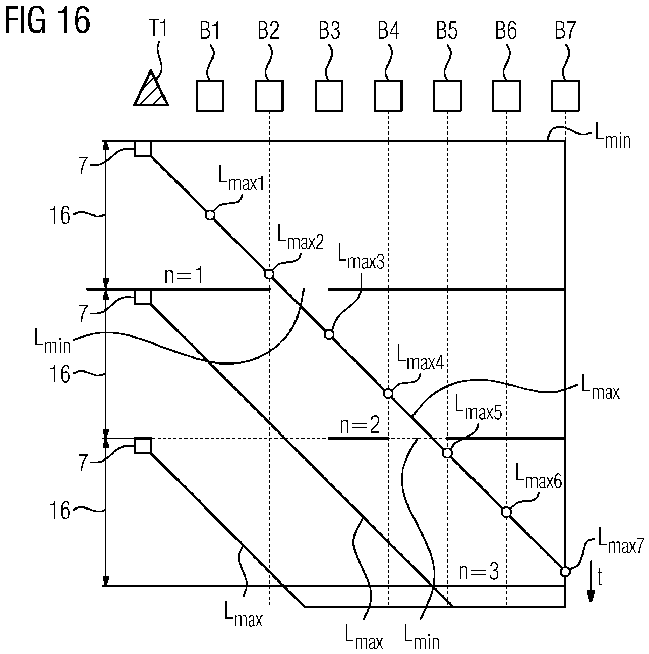

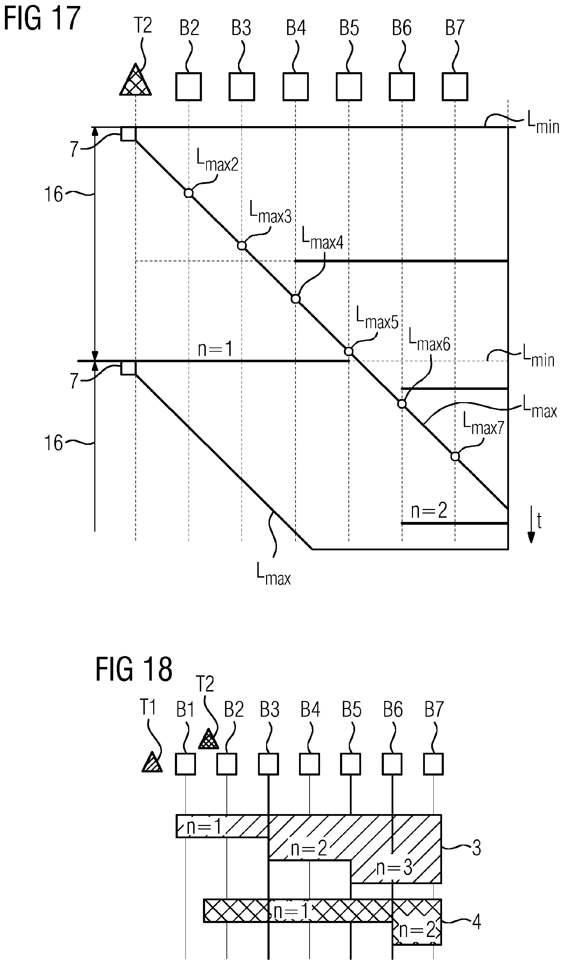

In den Figuren 16 und 17 sind für den ersten und den zweiten Stream - in Analogie zu Figuren 7 und 8 - der Daten-Update-Zyklus und die maximalen Latenzen Lₘₐₓ₁-Lₘₐₓ₇ dargestellt. Wie man erkennt, ist der Daten-Update-Zyklus 16 des ersten Streams deutlich kürzer als der des zweiten.

Welche Werte für n sich für die beiden Streams in diesem Szenario ergeben, ist in der FIG 18 (analog zu FIG 16 für einen Stream) dargestellt.

Wie man erkennt, ergibt sich aufgrund der Verhältnisse von Daten-Update-Zyklus 16 und den maximalen Latenzen Lₘₐₓ₁-Lₘₐₓ₇ (und somit den Latenz-Differenzen L1-ΔL7), dass für den ersten Stream die Netzwerkknoten B3-B7 Überlagerungs-Netzwerkknoten sind, wobei versucht wird, an dem dritten und vierten Knoten B3 und B4 doppelte Ressourcen (n=2) und für den fünften bis siebten Knoten B5-B7 dreifache Ressourcen (n=3) zu reservieren. Für den zweiten Stream bilden nur die letzten beiden Netzwerkknoten B6, B7 vor dem Listener L2b Überlagerungs-Netzwerkknoten und für diese ergibt sich n=2.

Für sämtliche vorstehend im Zusammenhang mit den Figuren 8 bis 18 beispielhaft beschriebene Szenarien gilt, dass nur wenn an allen Netzwerkknoten B1-B7 ausreichend Bandbreite auch für die ggf. doppelte bzw. dreifache Reservierung zur Verfügung steht, Reservierungen für beide Streams an allen Knoten erfolgreich sind, und über beide Streams an alle vier Listener L1a, L1b, L2a, L2b Datenframes mit garantierter Dienstgüte übertragen werden. Selbstverständlich ist es dabei beispielsweise möglich, dass die Reservierungen nur insoweit erfolgreich sind, dass die Listener eines Streams Daten empfangen können bzw. nur ein Teilnehmer eines Streams Daten empfangen kann. Stehen beispielsweise an den beiden letzten Knoten B6, B7 keine ausreichenden Ressourcen für die Reservierung für den zweiten Stream zum Listener L2b zur Verfügung, kann es sei, dass an diesen keine Datenweiterleitung erfolgt, da die Reservierung nicht erfolgreich durchgeführt werden konnte, der Listener L2a jedoch Daten empfängt, da die Reservierung entlang des für die Datenübertragung benötigten Pfades erfolgreich ist.

Für sämtliche der vorstehend beschriebenen Ausführungsbeispiele gilt, dass die Reservierung der Netzwerkressourcen an den beteiligten Netzwerkknoten B1-B7 mittels eines Reservierungsprotokolls abgewickelt wird, welches derart erweitert ist, dass der Vergleich zwischen dem Daten-Update-Zyklus 16, 17 und der Latenz-Differenz ΔL1-ΔL7 des jeweiligen Netzwerkknotens B1-B7 und die Ablehnung und/oder der Versuch, mehr Netzwerkressourcen zu reservieren als gemäß der Reservierungsanfrage erforderlich ist, über das Reservierungsprotokoll abgewickelt werden kann.

Nachdem eine Reservierung erfolgreich war, kann die Weiterleitung der Streams aktiviert werden. Dabei gilt, dass jeder beteiligte Netzwerkknoten B1-B7 einen empfangenen Stream-Datenframe jeweils zum frühestmöglichen Zeitpunkt ohne zusätzliche Verzögerung durch einen Shaper weiterleitet. Die Netzwerkknoten B1-B7 müssen sich entsprechend nicht durch eine Shaper unterstützende Ausgestaltung auszeichnen. Bestehende Hardware bzw. Netzwerke können weiter verwendet werden, wobei eine Datenübertragung mit garantierter QoS möglich ist.

Es sei angemerkt, dass jeder der Netzwerkknoten B1-B7 ein Ausführungsbeispiel eines erfindungsgemäßen Kommunikationsgerätes darstellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenübertragung in einem insbesondere industriellen Netzwerk, bei dem ein sendender Streamteilnehmer (T1, T2) Datenframes (7) periodisch als Stream gemäß einem zu dem Stream gehörigen Daten-Update-Zyklus (16, 17) an einen empfangenden Streamteilnehmer (L1a, L1b, L2a, L2b) senden möchte, wobei die Weiterleitung der Datenframes (7) über einen Pfad (P1-P4) mit beteiligten Netzwerkknoten (B1-B7), an denen Netzressourcen für den Stream zu reservieren sind, erfolgen soll, wobei für die Einrichtung des Streams eine Reservierungsanfrage gestellt wird, welche eine Angabe erforderlicher Netzressourcen für die Weiterleitung der Datenframes (7) durch die beteiligten Netzwerkknoten (B1-B7) umfasst, **dadurch gekennzeichnet, dass**
für wenigstens einen, bevorzugt jeden beteiligten Netzwerkknoten (B1-B7) auf dem Pfad (1-P4) die Differenz zwischen der maximalen (Lₘₐₓ₁-Lₘₐₓ₇) und der minimalen Latenz (Lₘᵢₙ₁-Lₘᵢₙ₇) bis zu diesem Netzwerkknoten (B1-B7) als Latenz-Differenz (ΔL1-ΔL7) ermittelt oder bereitgestellt wird, und die Latenz-Differenz (ΔL1-ΔL7) des oder des jeweiligen Netzwerkknotens (B1-B7) mit dem Daten-Update-Zyklus (16, 17) verglichen wird, und
- für den Fall, dass der Daten-Update-Zyklus (16, 17) größer oder gleich der Latenz-Differenz (ΔL1-ΔL7) des oder des jeweiligen Netzwerkknotens (B1-B7) ist, die Reservierungsanfrage für den oder den jeweiligen Netzwerkknoten (B1-B7) angenommen wird, und
- für den Fall, dass der Daten-Update-Zyklus (16, 17) kleiner als die Latenz-Differenz (ΔL1-ΔL7) des oder des jeweiligen Netzwerkknotens (B1-B7) ist,
- entweder die Reservierungsanfrage für den oder den jeweiligen Netzwerkknoten (B1-B7) abgelehnt wird,
- oder der oder der jeweilige Netzwerkknoten (B1-B7) als Überlagerungs-Netzwerkknoten (B3-B7) betrachtet und versucht wird, an diesem mehr Netzwerkressourcen zu reservieren, als gemäß der Reservierungsanfrage erforderlich ist.

2. Verfahren nach Anspruch 1,
**dadurch gekennzeichnet, dass**
genau ein sendender Stream-Teilnehmer (T1, T2) an mehrere empfangende Stream-Teilnehmer (L1a, L1b, L2a, L2b), mit denen der sendenden Stream-Teilnehmer (T1, T2) jeweils über einen Pfad (P1-P4) mit beteiligten Netzwerkknoten (B1-B7) verbunden ist, Datenframes (7) periodisch als Stream senden möchte, und/oder
mehrere sendende Stream-Teilnehmer (T1, T2) an genau einen empfangenden Stream-Teilnehmer (L1a, L1b, L2a, L2b), mit dem jeder sendende Stream-Teilnehmer (T1, T2) jeweils über einen Pfad (P1-P4) mit beteiligten Netzwerkknoten (B1-B7) verbunden ist, Datenframes (7) periodisch als Stream senden möchte, und für wenigstens einen, bevorzugt jeden beteiligten Netzwerkknoten (B1-B7) auf jedem Pfad (P1-P4) die Differenz zwischen der maximalen (Lₘₐₓ₁-Lₘₐₓ₇) und der minimalen Latenz (Lₘᵢₙ₁-Lₘᵢₙ₇) bis zu diesem Netzwerkknoten (B1-B7) als Latenz-Differenz (ΔL1-ΔL7) ermittelt oder bereitgestellt wird, und die Latenz-Differenz (ΔL1-ΔL7) des jeweiligen Netzwerkknotens (B1-B7) mit dem Daten-Update-Zyklus (16, 17) verglichen wird, und
- für den Fall, dass der Daten-Update-Zyklus (16, 17) größer oder gleich der Latenz-Differenz (ΔL1-ΔL7) des oder des jeweiligen Netzwerkknotens (B1-B7) ist, die Reservierungsanfrage für den oder den jeweiligen Netzwerkknoten (B1-B7) angenommen wird, und
- für den Fall, dass der Daten-Update-Zyklus (16, 17) kleiner als die Latenz-Differenz (ΔL1-ΔL7) des oder des jeweiligen Netzwerkknotens (B1-B7) ist,
- entweder die Reservierungsanfrage für den oder den jeweiligen Netzwerkknoten (B1-B7) abgelehnt wird,
- oder der oder der jeweilige Netzwerkknoten (B1-B7) als Überlagerungs-Netzwerkknoten (B3-B7) betrachtet und versucht wird, an diesem mehr Netzwerkressourcen zu reservieren, als gemäß der Reservierungsanfrage erforderlich ist.

3. Verfahren nach Anspruch 1 oder 2,
**dadurch gekennzeichnet, dass**
für den oder jeden Überlagerungs-Netzwerkknoten (B3-B7) eine Zahl n bestimmt wird, indem die Latenz-Differenz (ΔL1-ΔL7) des oder des jeweiligen Überlagerungs-Netzwerkknotens (B1-B7) durch den Daten-Update-Zyklus (16, 17) dividiert wird, und der erhaltene Wert, sofern er nicht bereits eine ganze Zahl darstellt, auf die nächste ganze Zahl aufgerundet wird, und versucht wird, an dem oder dem jeweiligen Überlagerungs-Netzwerkknoten (B3-B7) n mal so viel Netzwerkressourcen, wie gemäß der Reservierungsanfrage erforderlich ist, zu reservieren.

4. Verfahren nach einem der vorhergehenden Ansprüche,
**dadurch gekennzeichnet, dass**
für den Fall, dass die Reservierungsanfrage abgelehnt wird, der Daten-Update-Zyklus (16, 17) derart vergrößert wird, dass er der größten Latenz-Differenz (ΔL5, ΔL7) der beteiligten Netzwerkknoten (B1-B7) entspricht oder diese überschreitet, und/oder eine andere Stream-Klasse gewählt wird, für welche sich eine geringere Latenz-Differenz für den oder die beteiligten Netzwerkknoten (B1-B7) ergibt, wobei bevorzugt eine Stream-Klasse gewählt wird, für die gilt, dass die größte Latenz-Differenz (ΔL5, ΔL7) der beteiligten Netzwerkknoten (B1-B7) kleiner oder gleich dem Daten-Update-Zyklus (16, 17) ist.

5. Verfahren nach einem der vorhergehenden Ansprüche,
**dadurch gekennzeichnet, dass**
die Reservierung von Netzwerkressourcen an den beteiligten Netzwerkknoten (B1-B7) mittels eines Reservierungsprotokolls abgewickelt wird, welches bevorzugt derart erweitert ist, dass der Vergleich zwischen dem Daten-Update-Zyklus (16, 17) und der Latenz-Differenz (ΔL1-ΔL7) des jeweiligen Netzwerkknotens (B1-B7) und die Ablehnung und/oder der Versuch, mehr Netzwerkressourcen zu reservieren als gemäß der Reservierungsanfrage erforderlich ist, über das Reservierungsprotokoll abgewickelt werden kann oder abgewickelt wird.

6. Verfahren nach einem der vorhergehenden Ansprüche,
**dadurch gekennzeichnet, dass**
die maximale Latenz (Lₘₐₓ₁-Lₘₐₓ₇) bis zu dem oder dem jeweiligen Netzwerkknoten (B1-B7) unter Verwendung einer Stream-Ankündigungsnachricht, die insbesondere von einem Stream-Teilnehmer (T1, T2, L1a, L1b, L2a, L2b) gesendet wird und den oder den jeweiligen Netzwerkknoten (B1-B7) erreicht, bevorzugt von dem oder dem jeweiligen Netzwerkknoten (B1-B7) ermittelt wird.

7. Verfahren nach einem der vorhergehenden Ansprüche,
**dadurch gekennzeichnet, dass**
die Datenframes (7) unter Nutzung von an den beteiligten Netzwerkknoten (B1-B7) reservierten Netzwerkressourcen weitergeleitet werden, wobei jeder beteiligte Netzwerkknoten (B1-B7) einen empfangenen Datenframe (7) zum frühestmöglichen Zeitpunkt, bevorzugt ohne zusätzliche Verzögerung weiterleitet.

8. Verfahren nach einem der vorhergehenden Ansprüche,
**dadurch gekennzeichnet, dass**
die minimale Latenz (Lₘᵢₙ₁-Lₘᵢₙ₇) bis zu dem jeweiligen Netzwerkknoten (B1-B7) mit null angenommen wird.

9. Verfahren nach einem der vorhergehenden Ansprüche,
**dadurch gekennzeichnet, dass**
dem Stream eine Priorität für die Weiterleitung der Datenframes (7) zugeordnet ist, und im Netzwerk keine Streamklasse mit höherer Priorität existiert, von der nicht bekannt ist, wie sie behandelt wird.

10. Kommunikationsgerät (B1-B7), insbesondere zur Durchführung des Verfahrens nach einem der vorhergehenden Ansprüche, welches ausgebildet und/oder eingerichtet ist, um Reservierungsanfragen für eine Reservierung von Netzwerkressourcen für Streams abzuwickeln, und um die Differenz zwischen der maximalen (Lₘₐₓ₁-Lₘₐₓ₇) und der minimalen Latenz (Lₘᵢₙ₁-Lₘᵢₙ₇) bis zu dem Kommunikationsgerät für zu einem Stream gehörige Datenframes (7), die von einem sendenden Stream-Teilnehmer (T1, T2) gesendet werden und das Kommunikationsgerät (B1-B7) erreichen, als Latenz-Differenz (ΔL1-ΔL7) zu ermitteln oder übergeben zu bekommen, und um die Latenz-Differenz (ΔL1-ΔL7) mit einem Daten-Update-Zyklus (16, 17) einer Anwendung zu vergleichen, und eine Reservierungsanfrage für einen Stream
- für den Fall, dass der Daten-Update-Zyklus (16, 17) größer oder gleich der Latenz-Differenz (ΔL1-ΔL7) ist, anzunehmen, und
- für den Fall, dass der Daten-Update-Zyklus (16, 17) kleiner als die Latenz-Differenz (ΔL1-ΔL7) ist,
- entweder abzulehnen,
- oder zu versuchen, an dem Kommunikationsgerät (B1-B7) mehr Netzwerkressourcen zu reservieren, als gemäß der Reservierungsanfrage erforderlich ist.

11. Kommunikationsgerät (B1-B7) nach Anspruch 10,
**dadurch gekennzeichnet, dass**
das Kommunikationsgerät (B1-B7) ausgebildet und/oder eingerichtet ist, um die Latenz-Differenz (ΔL1-ΔL7) durch den Daten-Update-Zyklus (16, 17) zu dividieren, und den erhaltenen Wert, sofern er nicht bereits eine ganze Zahl darstellt, auf die nächste Zahl zu runden, und insbesondere zu versuchen, n mal so viel Netzwerkressourcen, wie gemäß der Reservierungsanfrage erforderlich ist, zu reservieren.

12. Kommunikationsgerät (B1-B7) nach Anspruch 10 oder 11,
**dadurch gekennzeichnet, dass**
das Kommunikationsgerät (B1-B7) ausgebildet und/oder eingerichtet ist, um die Reservierung von Netzwerkressourcen mittels eines Reservierungsprotokolls abzuwickeln, welches bevorzugt derart erweitert ist, dass der Vergleich zwischen dem Daten-Update-Zyklus (16, 17) und der Latenz-Differenz (ΔL1-ΔL7) des jeweiligen Netzwerkknotens (B1-B7) und die Ablehnung und/oder der Versuch mehr Ressourcen zu reservieren, als gemäß der Reservierungsanfrage erforderlich ist, über das Reservierungsprotokoll abgewickelt werden kann oder abgewickelt wird.

13. Kommunikationsgerät (B1-B7) nach einem der Ansprüche 10 bis 12,
**dadurch gekennzeichnet, dass**
das Kommunikationsgerät (B1-B7) ausgebildet und/oder eingerichtet ist, um eine maximale Latenz (Lₘₐₓ₁-Lₘₐₓ₇) unter Verwendung einer Stream-Ankündigungsnachricht, die insbesondere von einem Stream-Teilnehmer (T1, T2, L1a, L1b, L2a, L2b) gesendet wird und das Kommunikationsgerät (B1-B7) erreicht, zu ermitteln.

14. Kommunikationsgerät (B1-B7) nach einem der Ansprüche 10 bis 13,
**dadurch gekennzeichnet, dass**
das Kommunikationsgerät(B1-B7) ausgebildet und/oder eingerichtet ist, um empfangene Stream-Datenframes zum frühestmöglichen Zeitpunkt, bevorzugt ohne zusätzliche Verzögerung weiterzuleiten.

15. Kommunikationsgerät (B1-B7) nach einem der Ansprüche 10 bis 14,
**dadurch gekennzeichnet, dass**
das Kommunikationsgerät (B1-B7) ausgebildet und/oder eingerichtet ist, um die minimale Latenz (Lₘᵢₙ₁-Lₘᵢₙ₇) als null anzunehmen.

16. Computerprogramm umfassend Programmcode-Mittel zur Durchführung des Verfahrens nach einem der Ansprüche 1 bis 9.

17. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 9 durchzuführen.
